# EUROPÄISCHE PATENTSCHRIFT

(11) **EP 4 098 465 B1**
(45) Veröffentlichungstag und Bekanntmachung des Hinweises auf die Patenterteilung: **27.12.2023**
(21) Anmeldenummer: 21177215.7
(22) Anmeldetag: 01.06.2021
(51) Int. Cl.: B60K 15/03, B60K 15/07

(54) **DRUCKFLUIDBEHAELTERHALTERUNG**
COMPRESSED FLUID RESERVOIR HOLDER
DISPOSITIF DE MAINTIEN DE RÉSERVOIR DE FLUIDE SOUS PRESSION

(43) Veröffentlichungstag der Anmeldung: 07.12.2022
(73) Patentinhaber: Benteler Automobiltechnik GmbH, 33102 Paderborn (DE)
(72) Erfinder: GEHRINGHOFF, Ludger, 33106 Paderborn (DE); FROST, Georg, 32839 Steinheim (DE); HANDING, Christian, 33449 Langenberg (DE); STEINS, Christoph, 33165 Lichtenau-Kleinenberg (DE); DRABON, Rodscha, 33154 Salzkotten (DE); RABE, Frank, 32120 Hiddenhausen (DE)
(74) Vertreter: Patentship Patentanwaltsgesellschaft mbH

(56) Entgegenhaltungen:
- AT-U1- 11 734
- JP-A- 2001 113 962
- US-A1- 2004 075 034
- US-A1- 2011 140 483
- US-A1- 2014 069 972
- US-A1- 2017 361 702
- US-B2- 7 543 667

## Beschreibung

Die vorliegende Offenbarung betrifft eine Druckfluidbehälterhalterung, insbesondere eine Druckfluidbehälterhalterung zum Aufnehmen zumindest eines Druckfluidbehälters in einem mit Fluid betriebenen Kraftfahrzeug.

In herkömmlichen mit Fluid betriebenen Fahrzeugen, wie z.B. mit Wasserstoff, Erdgas oder Methan, betriebenen Fahrzeugen wird das Fluid in Druckfluidbehältern unter hohem Druck gespeichert. Um die entsprechenden Druckfluidbehälter in herkömmlichen mit Fluid betriebenen Fahrzeugen stabil zu lagern, und insbesondere bei einem Unfall eine Beschädigung der Druckfluidbehälter zu vermeiden, weisen herkömmliche mit Fluid betriebene Fahrzeuge Druckfluidbehälterhalterungen auf. An entsprechende Druckfluidbehälterhalterungen werden hohe strukturelle Anforderungen in Bezug auf deren mechanische Stabilität gestellt. Zudem müssen entsprechende Druckfluidbehälterhalterungen in möglichst einfacher und kostengünstiger Art und Weise herstellbar sein.

Die Druckschrift DE 10 2019 211 263 B1 offenbart ein Elektrofahrzeug mit einem Gehäuse zur Aufnahme eines Druckfluidspeichers.

Die Druckschrift EP 3 395 656 B1 offenbart den Aufbau eines Fahrzeugunterteils.

Die Druckschrift US 2011/0140483 A1 offenbart eine auf einem Fahrzeugdach angeordneten Dachstruktur in welcher Treibstofftanks untergebracht sind.

Es ist die Aufgabe der vorliegenden Offenbarung, eine stabile und einfach zu fertigende Druckfluidbehälterhalterung für ein mit Fluid betriebenes Fahrzeug bereitzustellen.

Diese Aufgabe wird durch die Merkmale der unabhängigen Ansprüche gelöst. Vorteilhafte Ausführungsformen sind Gegenstand der abhängigen Ansprüche, der Beschreibung sowie der beiliegenden Figuren.

Die vorliegende Offenbarung basiert auf der Erkenntnis, dass die obige Aufgabe durch eine Druckfluidbehälterhalterung gelöst werden kann, welche zumindest ein Druckfluidbehälteraufnahmeelement aufweist, welches zumindest eine Druckfluidbehälteraufnahme aufweist, in welcher der zumindest eine Druckfluidbehälter aufgenommen ist. Somit stabilisiert das zumindest eine Druckfluidbehälteraufnahmeelement den Druckfluidbehälter innerhalb der Druckfluidbehälterhalterung. Zudem weist die Druckfluidbehälterhalterung zumindest einen Verstärkungsträger auf, welcher einer weitergehende Stabilisierung der Druckfluidbehälterhalterung sicherstellt.

Ferner weist die Druckfluidbehälterhalterung gemäß der vorliegenden Offenbarung eine Aufnahmewanne auf, welche eine Bodenplatte und eine mit der Bodenplatte einstückig gebildete umlaufende Außenwand aufweist. Durch eine einstückige Ausbildung von Bodenplatte und der umlaufenden Außenwand wird eine besonders vorteilhafte Herstellung der Druckfluidbehälterhalterung ermöglicht.

Gemäß einem ersten Aspekt betrifft die Offenbarung eine Druckfluidbehälterhalterung zum Aufnehmen zumindest eines Druckfluidbehälters in einem mit Fluid betriebenen Fahrzeug, mit einer Aufnahmewanne, wobei die Aufnahmewanne eine Bodenplatte und eine umlaufende Außenwand aufweist, welche auf der Bodenplatte oder die Bodenplatte umlaufend angeordnet ist, wobei die Bodenplatte und die umlaufende Außenwand einstückig ausgebildet sind, zumindest einem Verstärkungsträger, welcher an der Aufnahmewanne festgelegt ist und sich zwischen zwei gegenüberliegenden Seiten der umlaufenden Außenwand erstreckt, und zumindest einem Druckfluidbehälteraufnahmeelement, welches in dem Innenraum der Aufnahmewanne angeordnet ist, wobei das Druckfluidbehälteraufnahmeelement mit der Bodenplatte und/oder der umlaufenden Außenwand der Aufnahmewanne verbunden ist, wobei das Druckfluidbehälteraufnahmeelement zumindest eine Druckfluidbehälteraufnahme aufweist, wobei die zumindest eine Druckfluidbehälteraufnahme geformt ist, zumindest einen Druckfluidbehälter aufzunehmen.

Dadurch wird der technische Vorteil erreicht, dass eine mechanisch stabile Befestigung des zumindest einen Druckfluidbehälters in der zumindest einen Druckfluidbehälteraufnahme des Druckfluidbehälteraufnahmeelements sichergestellt wird, so dass sich der aufgenommene Druckfluidbehälter hierbei bei auf das Fahrzeug wirkenden großen Beschleunigungen, z.B. bei einem Aufprall, innerhalb der Aufnahmewanne nicht bewegen kann. Dadurch kann eine Beschädigung des Druckfluidbehälters und ein Austreten von Fluid aus dem Druckfluidbehälter vorteilhaft verhindert werden.

Die an der Aufnahmewanne festgelegten Verstärkungsträger stabilisieren hierbei die Aufnahmewanne strukturell, so dass eine wirksame Aufnahme von im Falle eines Aufpralls des Fahrzeugs auf die Aufnahmewanne wirkender Aufprallenergie sichergestellt wird.

Durch die einstückige Ausbildung von Bodenplatte und der umlaufenden Außenwand wird eine besonders einfache und damit kostengünstige Herstellung der Aufnahmewanne sichergestellt, so dass sich insbesondere eine kostengünstige und an die Einbausituation flexibel anpassbare Fertigung ergibt.

Insbesondere umläuft die auf der Bodenplatte angeordnete oder die Bodenplatte umlaufende Außenwand die Bodenplatte vollständig.

Insbesondere umfasst der zumindest eine Verstärkungsträger einen einzigen Verstärkungsträger oder eine Mehrzahl von Verstärkungsträgern, wobei die Mehrzahl von Verstärkungsträgern insbesondere nebeneinander, insbesondere parallel zueinander in der Aufnahmewanne angeordnet ist.

Insbesondere ist nur ein Teil der Mehrzahl von Verstärkungsträgern insbesondere nebeneinander, insbesondere parallel, in der Aufnahmewanne angeordnet, und umfasst die Mehrzahl der Verstärkungsträger zumindest einen Verstärkungsträger, insbesondere eine Mehrzahl von Verbindungsträgern, welcher, bzw. welche winklig, insbesondere rechtwinklig, oder diagonal zu den insbesondere nebeneinander in der Aufnahmewanne angeordneten Verstärkungsträgern angeordnet ist, bzw sind.

Insbesondere ist der zumindest eine Verstärkungsträger endseitig an der umlaufenden Außenwand der Aufnahmewanne festgelegt. Alternativ oder zusätzlich ist insbesondere der zumindest eine Verstärkungsträger an der Bodenplatte der Aufnahmewanne festgelegt.

Insbesondere liegt ein Ende des jeweiligen Verstärkungsträgers an der umlaufenden Außenwand an und das andere Ende des jeweiligen Verstärkungsträgers kann über ein Fügeelement, ein Toleranzausgleichselement und/oder einen Toleranzspalt an der Außenwand befestigt sein.

Insbesondere ist der zumindest eine Verstärkungsträger, insbesondere zumindest ein Ende des zumindest einen Verstärkungsträgers, endseitig mit der umlaufenden Außenwand verbunden. Insbesondere ist der zumindest eine Verstärkungsträger, insbesondere zumindest ein Ende des zumindest einen Verstärkungsträgers, endseitig mit der umlaufenden Außenwand stoffschlüssig, insbesondere durch eine Schweißverbindung oder eine Klebverbindung, formschlüssig, insbesondere durch ein Fügeelement, und/oder kraftschlüssig, insbesondere durch ein Befestigungselement, verbunden.

Insbesondere ist der zumindest eine Verstärkungsträger mit der Bodenplatte verbunden. Insbesondere ist der zumindest eine Verstärkungsträger mit der Bodenplatte stoffschlüssig, insbesondere durch eine Schweißverbindung oder eine Klebverbindung, formschlüssig, insbesondere durch ein Fügeelement, und/oder kraftschlüssig, insbesondere durch ein Befestigungselement, verbunden.

Insbesondere umfasst das zumindest eine Druckfluidbehälteraufnahmeelement ein einziges Druckfluidbehälteraufnahmeelement oder eine Mehrzahl von Druckfluidbehälteraufnahmeelementen, wobei die Mehrzahl von Druckfluidbehälteraufnahmeelementen insbesondere nebeneinander, insbesondere parallel zueinander in der Aufnahmewanne angeordnet ist.

Insbesondere ist nur ein Teil der Mehrzahl von Druckfluidbehälteraufnahmeelementen insbesondere nebeneinander, insbesondere parallel, in der Aufnahmewanne angeordnet, und umfasst die Mehrzahl der Druckfluidbehälteraufnahmeelementen zumindest ein Druckfluidbehälteraufnahmeelement, insbesondere eine Mehrzahl von Druckfluidbehälteraufnahmeelementen, welcher, bzw. welche winklig, insbesondere rechtwinklig, oder diagonal zu den insbesondere nebeneinander in der Aufnahmewanne angeordneten Druckfluidbehälteraufnahmeelementen angeordnet ist, bzw. sind.

Das zumindest eine Druckfluidbehälteraufnahmeelement ist insbesondere mit der Bodenplatte verbunden, oder ist insbesondere mit der umlaufenden Außenwand, oder ist insbesondere mit der Bodenplatte und mit der umlaufenden Außenwand verbunden.

Insbesondere ist das zumindest eine Druckfluidbehälteraufnahmeelement mit der Bodenplatte stoffschlüssig, insbesondere durch eine Schweißverbindung oder eine Klebverbindung, formschlüssig, insbesondere durch ein Fügeelement, und/oder kraftschlüssig, insbesondere durch ein Befestigungselement, verbunden.

Das zumindest eine Druckfluidbehälteraufnahmeelement ist insbesondere mit der umlaufenden Außenwand verbunden. Insbesondere ist das zumindest eine Druckfluidbehälteraufnahmeelement mit der umlaufenden Aufnahmewand stoffschlüssig, insbesondere durch eine Schweißverbindung oder eine Klebverbindung, formschlüssig, insbesondere durch ein Fügeelement, und/oder kraftschlüssig, insbesondere durch ein Befestigungselement, verbunden.

Insbesondere weist das zumindest eine Druckfluidbehälteraufnahmeelement eine einzige Druckfluidbehälteraufnahme auf, wobei die einzige Druckfluidbehälteraufnahme geformt ist, einen einzigen Druckfluidbehälter aufzunehmen. Insbesondere weist das zumindest eine Druckfluidbehälteraufnahmeelement eine Mehrzahl von Druckfluidbehälteraufnahmen auf, wobei die Mehrzahl von Druckfluidbehälteraufnahmen geformt sind, eine Mehrzahl von Druckfluidbehältern aufzunehmen. Hierbei ist insbesondere jeweils ein Druckfluidbehälter der Mehrzahl von Druckfluidbehälter in jeweils einer Druckfluidbehälteraufnahme der Mehrzahl von Druckfluidbehälteraufnahmen angeordnet.

Insbesondere ist die Aufnahmewanne, der zumindest eine Verstärkungsträger, und/oder das zumindest eine Druckfluidbehälteraufnahmeelement aus Metal, insbesondere Aluminium und/oder Stahl geformt.

Insbesondere ist das mit Fluid betriebene Fahrzeug ein mit Gas, insbesondere Wasserstoff, Erdgas oder Methan betriebenes Fahrzeug, und ist der zumindest eine Druckfluidbehälter ausgebildet ein Gas, insbesondere Wasserstoff, Erdgas oder Methan aufzunehmen.

Insbesondere weist der zumindest eine Druckfluidbehälter eine beliebige Form auf, insbesondere mit einem rechteckigen, runden und/oder ovalen Querschnitt.

Insbesondere entspricht die Länge des zumindest eine Druckfluidbehälters einer Läge oder einer Breite der Aufnahmewanne.

Insbesondere umfasst die Druckfluidbehälterhalterung eine mediendichte Abdichtung zwischen dem Innenraum der Aufnahmewanne und dem Außenraum der Aufnahmewanne.

Insbesondere ist das mit Fluid betriebene Fahrzeug ein mit Fluid, insbesondere Gas, und mit elektrischer Energie betriebenes Fahrzeug, welches neben dem zumindest einen Druckfluidbehälter zum Speichern des Fluides, insbesondere des Gases, auch noch eine Mehrzahl von Batteriemodulen zum Speichern von elektrischer Energie aufweist, wobei hierbei insbesondere z.B. durch eine Brennstoffzelle, die in dem Fluid, insbesondere Gas, gespeicherte chemische Energie in elektrische Energie umgewandelt werden kann, welche anschließend in der Mehrzahl von Batteriemodulen gespeichert werden kann, um die für den Betrieb des Fahrzeugs benötigte Energie bereitzustellen.

Insbesondere ist die Druckfluidbehälterhalterung, insbesondere die Aufnahmewanne, ausgebildet eine Mehrzahl von Batteriemodulen zum Speichern von elektrischer Energie aufzunehmen. Die Batteriemodule sind hierbei insbesondere zusätzlich zu dem zumindest einen Druckfluidbehälter in der Druckfluidbehälterhalterung, insbesondere der Aufnahmewanne, aufgenommen.

Insbesondere weist die Aufnahmewanne eine Mehrzahl von Batteriemodulaufnahmen auf, wobei insbesondere jeweils eine Batteriemodulaufnahme der Mehrzahl von Batteriemodulaufnahmen ausgebildet ist, jeweils ein Batteriemodul der Mehrzahl von Batteriemodulen aufzunehmen.

Insbesondere sind die Batteriemodulaufnahmen durch den zumindest einen Verbindungsträger, insbesondere die Mehrzahl von Verbindungsträger und/oder das zumindest eine Druckfluidbehälteraufnahmeelement, insbesondere die Mehrzahl von Druckfluidbehälteraufnahmeelementen voneinander abgegrenzt.

Insbesondere sind an der Bodenplatte, der umlaufenden Außenwand und/oder dem Deckel versteifende Elemente, insbesondere Sicken, geformt.

Die Bodenplatte kann ferner eine Wärmetauscherstruktur für die Temperierung der Druckfluidbehälter und/oder Batteriemodule aufweisen, wobei die Wärmetauscherstruktur insbesondere Fluidhohlkanäle aufweist, welche innerhalb der Bodenplatte gebildet und zum Leiten von Fluid ausgebildet sind.

Insbesondere weist die Aufnahmewanne an einer dem Innenraum der Aufnahmewanne abgewandten Außenseite einen Crashrahmen auf, welcher insbesondere die umlaufende Außenwand zumindest abschnittsweise, insbesondere vollständig umläuft. Der Crashrahmen ist ausgebildet, auf die Aufnahmewanne einwirkende Kräfte aufzunehmen, um dadurch eine Beschädigung der Aufnahmewanne, z.B. durch eine Fahrzeugkollision, zu vermeiden.

In einer Ausführungsform weist das Druckfluidbehälteraufnahmeelement eine Mehrzahl von Druckfluidbehälteraufnahmen auf, wobei die Druckfluidbehälteraufnahmen geformt sind, eine Mehrzahl von Druckfluidbehältern aufzunehmen, wobei jeweils benachbarte Druckfluidbehälteraufnahmen insbesondere durch einen Trennsteg des Druckfluidbehälteraufnahmeelements voneinander getrennt sind.

Dadurch wird der technische Vorteil erreicht, dass die jeweiligen Druckfluidbehälter in der jeweiligen Druckfluidbehälteraufnahme voneinander beanstandet angeordnet sind, so dass es zu keinem Kontakt zwischen den jeweiligen Druckfluidbehältern kommt, welche in jeweils benachbarten Druckfluidbehälteraufnahmen aufgenommen sind.

Insbesondere umfasst das Druckfluidbehälteraufnahmeelement eine Mehrzahl von Trennstegen.

Insbesondere ist zwischen jeweils benachbarten Trennstegen des Druckfluidbehälteraufnahmeelements jeweils eine Druckfluidbehälteraufnahme des Druckfluidbehälteraufnahmeelements angeordnet.

Insbesondere begrenzt der jeweils endseitige Trennsteg des Druckfluidbehälteraufnahmeelements nur eine Druckfluidbehälteraufnahme des Druckfluidbehälteraufnahmeelements.

Insbesondere erstrecken sich die Trennstege von dem jeweiligen Druckfluidbehälteraufnahmeelement in Richtung eines Deckels der Aufnahmewanne. Insbesondere liegen die Trennstege an dem Deckel an. Insbesondere sind die Trennstege mit dem Deckel verbunden, insbesondere formschlüssig, kraftschlüssig und/oder stoffschlüssig verbunden.

In einer Ausführungsform weisen die Druckfluidbehälteraufnahmen jeweils eine Aufnahmekontur auf, welche jeweils komplementär zu einer Außenkontur der Druckfluidbehälter geformt ist, wobei die Aufnahmekontur insbesondere einen mehreckigen oder kreisförmigen Querschnitt aufweist.

Dadurch wird der technische Vorteil erreicht, dass die zu der Außenkontur des Druckfluidbehälters jeweils komplementär geformte Aufnahmekontur der Druckfluidbehälteraufnahme sicherstellt, dass eine wirksame, insbesondere rutschfeste, Aufnahme des Druckfluidbehälters in der Druckfluidbehälteraufnahme ermöglicht wird.

Insbesondere weist die Aufnahmekontur der Druckfluidbehälteraufnahme und die Außenkontur des Druckfluidbehälters einen mehreckigen, insbesondere viereckigen Querschnitt auf.

Insbesondere weist die Aufnahmekontur der Druckfluidbehälteraufnahme einen kreisförmigen, insbesondere ovalen oder halbkreisförmigen, Querschnitt und weist die Außenkontur des Druckfluidbehälters einen kreisförmigen, insbesondere ovalen oder vollkreisförmigen Querschnitt auf.

Insbesondere ist an der Aufnahmekontur der Druckfluidbehälteraufnahme ein Antirutschelement, insbesondere eine Kunststofflippe, angeordnet.

In einer Ausführungsform ist das Druckfluidbehälteraufnahmeelement als eine Druckfluidbehälteraufnahmeleiste oder als ein Druckfluidbehälteraufnahmehohlkörper geformt, welche oder welcher sich zwischen zwei gegenüberliegenden Seiten, insbesondere einer Vorderseite und einer der Vorderseite gegenüberliegenden Rückseite oder einer ersten Lateralseite und einer der ersten Lateralseite gegenüberliegenden zweiten Lateralseite, der umlaufenden Außenwand erstreckt, und wobei die Druckfluidbehälteraufnahmeleiste oder der Druckfluidbehälteraufnahmehohlkörper insbesondere an der umlaufenden Außenwand festgelegt ist.

Dadurch wird der technische Vorteil erreicht, dass eine Druckfluidbehälteraufnahmeleiste oder ein Druckfluidbehälteraufnahmehohlkörper ein strukturell besonders stabiles Druckfluidbehälteraufnahmeelement bereitstellen.

Insbesondere weist die Druckfluidbehälteraufnahmeleiste endseitig einen Befestigungsabschnitt auf, welcher mit der umlaufenden Außenwand verbunden ist, wobei sich der Befestigungsabschnitt insbesondere winklig zu der Druckfluidbehälteraufnahmeleiste erstreckt.

Insbesondere ist das Druckfluidbehälteraufnahmeelement, insbesondere der Befestigungsabschnitt mit der umlaufenden Aufnahmewand stoffschlüssig, insbesondere durch Schweißen oder Kleben, oder formschlüssig, insbesondere durch Nieten, oder kraftschlüssig, insbesondere durch Schrauben, verbunden.

Insbesondere weist der Druckfluidbehälteraufnahmehohlkörper hierbei eine erste Hohlkörperlateralwandung, eine der erste Hohlkörperlateralwandung gegenüberliegende zweite Hohlkörperlateralwandung, eine Hohlkörperbodenwandung und eine der Hohlkörperbodenwandung gegenüberliegende Hohlkörperoberwandung auf, welche einen Hohlkörperinnenraum des Druckfluidbehälteraufnahmehohlkörpers begrenzen.

Insbesondere der Druckfluidbehälteraufnahmehohlkörper endseitig offen.

Insbesondere weist der Druckfluidbehälteraufnahmehohlkörper einen einzigen Hohlkörperinnenraum auf oder weist der Druckfluidbehälteraufnahmehohlkörper eine Mehrzahl von Hohlkörperinnenräumen auf, welche durch eine Hohlkörperzwischenwandung voneinander abgetrennt sind.

In einer Ausführungsform weist die Druckfluidbehälterhalterung eine Mehrzahl von Druckfluidbehälteraufnahmeelementen auf, welche nebeneinander in dem Innenraum der Aufnahmewanne angeordnet ist, wobei jeweils gegenüberliegende Druckfluidbehälteraufnahmen der jeweiligen Druckfluidbehälteraufnahmeelemente fluchtend zueinander angeordnet sind, um in den jeweils gegenüberliegenden Druckfluidbehälteraufnahmen jeweils einen Druckfluidbehälter aufzunehmen.

Dadurch wird der technische Vorteil erreicht, dass die Druckfluidbehälter an unterschiedlichen Bereichen durch die jeweils fluchtend zueinander angeordneten Druckfluidbehälteraufnahmen stabilisiert sind.

In einer Ausführungsform weist die Druckfluidbehälterhalterung einen Deckel auf, welcher mit der umlaufenden Außenwand verbunden ist, und einen Innenraum der Aufnahmewanne abschließt.

Dadurch wird der technische Vorteil erreicht, dass der mit der umlaufenden Außenwand verbundene Deckel hierbei den Innenraum der Aufnahme an der Oberseite vorteilhaft abschließt, so dass der in dem Innenraum der Aufnahmewanne angeordnete Druckfluidbehälter vorteilhaft vor externen Einflüssen, wie z.B. Feuchtigkeit geschützt sind, wodurch beispielsweise eine Korrosion des Druckfluidbehälters während des Betriebs des Fahrzeugs verhindert werden kann.

Insbesondere ist der Deckel aus Stahl geformt und stellt hierbei eine Brandschutzfunktion und eine Steifigkeitsfunktion der Druckfluidbehälterhalterung sicher.

Insbesondere weist die Druckfluidbehälterhalterung ein fluiddichte Verbindung zwischen dem Deckel und der umlaufenden Außenwand auf.

In einer Ausführungsform ist der zumindest eine Verstärkungsträger mit der Bodenplatte, der umlaufenden Außenwand und/oder dem Deckel der Aufnahmewanne verbunden, oder ist der zumindest eine Verstärkungsträger an der Bodenplatte, der umlaufenden Außenwand und/oder dem Deckel der Aufnahmewanne durch ein Toleranzausgleichelement festgelegt.

Dadurch wird der technische Vorteil erreicht, dass durch eine direkte Verbindung eine besonders stabile Anbindung des Verstärkungsträgers an die umlaufende Außenwand sichergestellt wird, und dass durch das Toleranzausgleichelement ein auftretender Toleranzbereich zwischen der umlaufenden Außenwand und dem Verstärkungsträger wirksam ausgeglichen werden kann.

Der zumindest eine Verstärkungsträger ist mit der umlaufenden Außenwand der Aufnahmewanne insbesondere formschlüssig, insbesondere durch ein Fügeelement, stoffschlüssig, insbesondere durch eine Klebe- oder Schweißverbindung, oder kraftschlüssig verbunden.

Der zumindest eine Verstärkungsträger ist mit der Bodenplatte insbesondere stoffschlüssig, insbesondere durch eine Klebe- oder Schweißverbindung, kraftschlüssig oder formschlüssig, insbesondere durch ein Fügelement, verbunden.

In einer Ausführungsform umfasst die umlaufende Außenwand eine Vorderseite, eine der Vorderseite gegenüberliegende Rückseite, eine erste Lateralseite, und eine der ersten Lateralseite gegenüberliegende zweite Lateralseite, wobei sich der zumindest eine Verstärkungsträger zwischen der Vorderseite und der Rückseite und/oder zwischen der ersten Lateralseite und der zweiten Lateralseite der umlaufenden Außenwand erstreckt.

Dadurch wird der technische Vorteil erreicht, dass die sich zwischen gegenüberliegenden Seiten der umlaufenden Außenwand der Aufnahmewanne erstreckenden Verstärkungsträger eine wirksame Stabilisierung der Aufnahmewanne sicherstellen.

Insbesondere umfasst die erste Lateralseite, zweite Lateralseite, Vorderseite und Rückseite der umlaufenden Außenwand jeweils eine einzige Wandung, so dass die umlaufende Außenwand eine rechteckige Grundfläche der Bodenplatte begrenzt.

Insbesondere umfasst die erste Lateralseite, zweite Lateralseite, Vorderseite und/oder Rückseite der umlaufenden Außenwand jeweils eine Mehrzahl von schräg zueinander angeordneten Wandungen, so dass die umlaufende Außenwand eine sechseckige, achteckige, zehneckige oder zwölfeckige Grundfläche der Bodenplatte begrenzt.

In einer Ausführungsform weist der Deckel eine Deckeloberseite und eine umlaufende Deckelwand auf, welche an der Deckeloberseite oder die Deckeloberseite umlaufend angeordnet ist, wobei die Deckeloberseite und die umlaufende Deckelwand einstückig ausgebildet sind, und wobei die umlaufende Deckelwand mit der umlaufenden Außenwand verbunden ist.

Dadurch wird der technische Vorteil erreicht, dass eine stabile Verbindung zwischen der umlaufenden Deckelwand des Deckels und der umlaufenden Außenwand der Aufnahmewanne bereitgestellt werden kann. Durch die einstückige Ausbildung von Deckeloberseite und der umlaufenden Deckelwand kann eine besonders vorteilhafte Herstellung des Deckels sichergestellt werden.

In einer Ausführungsform weist die umlaufenden Außenwand einen ersten umlaufenden Befestigungsflansch auf, und weist der Deckel, insbesondere die umlaufende Deckelwand, einen zweiten umlaufenden Befestigungsflansch auf welcher mit dem ersten umlaufenden Befestigungsflansch verbunden ist, um den Deckel mit der umlaufenden Außenwand zu verbinden.

Dadurch wird der technische Vorteil erreicht, dass durch die Verbindung zwischen dem ersten und zweiten Befestigungsflansch eine besonders vorteilhafte Verbindung zwischen dem Deckel und der umlaufenden Außenwand sichergestellt werden kann.

Insbesondere sind der erste und zweite Befestigungsflansch stoffschlüssig, formschlüssig, und/oder kraftschlüssig miteinander verbunden.

Insbesondere weist der erste und zweite Befestigungsflansch eine Mehrzahl von Flanschöffnungen auf, welche jeweils von einem Flanschbefestigungselement, insbesondere Flanschschraube, durchsetzbar sind.

Insbesondere ist der erste Befestigungsflansch mit der umlaufenden Außenwand und/oder ist der zweite Befestigungsflansch mit dem Deckel durch thermisches Fügen verbunden.

In einer Ausführungsform weist die Druckfluidbehälterhalterung eine Druckanschlussleitung auf, welche zumindest abschnittsweise in dem Innenraum der Aufnahmewanne angeordnet ist, und welche ausgebildet ist, eine Anschlussverbindung zu dem Druckfluidbehälter bereitzustellen, wobei die Aufnahmewanne, insbesondere die Bodenplatte, die umlaufende Außenwand und/oder der Deckel, einen Leitungsdurchbruch aufweist, durch welchen die Druckanschlussleitung aus dem Innenraum der Aufnahmewanne geführt ist.

Dadurch wird der technische Vorteil erreicht, dass durch die Druckanschlussleitung eine wirksame Zufuhr von Fluid in den Druckfluidbehälter, bzw. eine wirksame Abfuhr von Fluid aus dem Druckfluidbehälter sichergestellt werden kann.

In einer Ausführungsform ist an einem Außenbereich der Aufnahmewanne, insbesondere unterhalb eines ersten umlaufenden Befestigungsflansches ein Befestigungsbereich geformt, welcher ausgebildet ist, die Aufnahmewanne an einem Fahrzeugbauteil, insbesondere an einem Sitzquerträger, zu befestigen.

Dadurch wird der technische Vorteil erreicht, dass über den Befestigungsbereich des Befestigungsflansches eine wirksame stabile und strukturelle Befestigung zwischen der Druckfluidbehälterhalterung und dem Fahrzeugbauteil sichergestellt werden kann.

In einer Ausführungsform ist an einem Außenbereich der umlaufenden Außenwand der Aufnahmewanne wenigstens ein Hohlprofil befestigt.

Dadurch wird der technische Vorteil erreicht, dass das Hohlprofil, welches insbesondere auch als Hohlkammerprofil bezeichnet werden kann, als Deformationselement zum Schutz der Aufnahmewanne, des Innenraums und der Druckfluidbehälter vor unfallbedingter Beschädigung dient. Gleichzeitig dient das Hohlprofil insbesondere zur Befestigung der Druckfluidbehälterhalterung an dem Kraftfahrzeug, insbesondere an einem Seitenschweller.

In einer Ausführungsform sind die einstückig ausgebildete Bodenplatte und umlaufende Außenwand und/oder sind der Deckel als ein Tiefziehbauteil, Faltbauteil, Warmumformbauteil oder Hydroformbauteil geformt.

Dadurch wird der technische Vorteil erreicht, dass eine vorteilhafte Herstellung der Aufnahmewanne, bzw. des Deckels ermöglicht wird.

Gemäß einem zweiten Aspekt betrifft die Offenbarung ein Druckfluidbehältersystem umfassend eine Druckfluidbehälterhalterung gemäß dem ersten Aspekt, und zumindest einen Druckfluidbehälter, wobei der Druckfluidbehälter in der zumindest einen Druckfluidbehälteraufnahme aufgenommen ist.

Dadurch wird der technische Vorteil erreicht, dass das Druckfluidbehältersystem umfassend die Druckfluidbehälterhalterung und die Druckfluidbehälter eine mechanisch stabile Aufnahme der Druckfluidbehälter sicherstellt.

Gemäß einem dritten Aspekt betrifft die Offenbarung ein Verfahren zum Herstellen einer Druckfluidbehälterhalterung zum Aufnehmen zumindest eines Druckfluidbehälters in einem mit Fluid betriebenen Fahrzeug, wobei das Verfahren die folgenden Verfahrensschritte umfasst, Einstückiges Formen einer Aufnahmewanne aus einem ersten Halbzeug, wobei die Aufnahmewanne eine Bodenplatte und eine umlaufende Außenwand aufweist, welche auf der Bodenplatte oder die Bodenplatte umlaufend angeordnet ist, wobei die Bodenplatte und die umlaufende Außenwand einstückig ausgebildet sind, Formen zumindest eines Verstärkungsträgers aus einem zweiten Halbzeug, Festlegen des Verstärkungsträgers an der Aufnahmewanne, Formen zumindest eines Druckfluidbehälteraufnahmeelements mit zumindest einer Druckfluidbehälteraufnahme aus einem dritten Halbzeug, Verbinden des zumindest einen Druckfluidbehälteraufnahmeelements mit der Bodenplatte der Aufnahmewanne, und Formen, insbesondere einstückiges Formen eines Deckels aus einem dritten Halbzeug.

Dadurch wird der technische Vorteil erreicht, dass eine vorteilhafte Herstellung des Druckfluidbehälteraufnahmeelements sichergestellt wird.

Insbesondere umfasst das einstückiges Formen der Aufnahmewanne das Zuschneiden der Aufnahmewanne, um einen ersten umlaufenden Befestigungsflansch an der Aufnahmewanne zu erhalten. Insbesondere umfasst das Zuschneiden der Aufnahmewanne das Ausschneiden von Ausschnitten aus dem ersten umlaufenden Befestigungsflansch.

Insbesondere umfasst das Formen des zumindest einen Druckfluidbehälteraufnahmeelements das Ausschneiden der zumindest einen Druckfluidbehälteraufnahme aus dem zumindest einen Druckfluidbehälteraufnahmeelement.

Insbesondere umfasst das Formen des Deckels das Zuschneiden des Deckels, um einen zweiten umlaufenden Befestigungsflansch an dem Deckel zu erhalten. Insbesondere umfasst das Zuschneiden der Aufnahmewanne das Ausschneiden von Ausschnitten aus dem zweiten umlaufenden Befestigungsflansch.

Insbesondere umfasst das Verfahren den optionalen Verfahrensschritt Durchführen einer zumindest partiellen Oberflächenbehandlung der Aufnahmewanne und/oder des Deckels, wobei die zumindest partielle Oberflächenbehandlung insbesondere ein Waschen und/oder ein Beschichten der Aufnahmewanne und/oder des Deckels umfasst.

Insbesondere umfasst das Verfahren den optionalen Verfahrensschritt Einbringen des zumindest einen Druckfluidbehälters in die zumindest eine Druckfluidbehälteraufnahme.

Insbesondere umfasst das Verfahren den optionalen Verfahrensschritt, Verbinden des Deckels mit der umlaufenden Außenwand nach dem Einbringen des zumindest einen Druckfluidbehälters in die zumindest eine Druckfluidbehälteraufnahme.

In einer Ausführungsform umfasst das einstückige Formen der Aufnahmewanne und/oder das Formen des Deckels einen Tiefziehprozess, einen Faltprozess, einen Steckprozess, einen Warmumformprozess oder einen Hydroformprozess umfasst, und/oder umfasst das Formen des zumindest eines Verstärkungsträgers einen Warmumformprozess, einen Kaltumformprozess, einen Rollformprozess oder einen Extrusionsprozess, und/oder umfasst das Formen des zumindest einen Druckfluidbehälteraufnahmeelements Warmumformprozess, einen Kaltumformprozess, einen Rollformprozess oder einen Extrusionsprozess.

Dadurch wird der technische Vorteil erreicht, dass eine vorteilhafte Herstellung des Druckfluidbehälteraufnahmeelements sichergestellt wird.

Insbesondere wird die Bodenplatte der Aufnahmewanne und/oder der Deckels perforiert, wobei die Löcher insbesondere bionisch angeordnet und/oder nur zwischen zwei benachbarten Aufnahmen oder zwei benachbarten Trägern ausgebildet sind.

Dadurch wird der technische Vorteil erreicht, dass des Gewicht der gesamten Anordnung vorteilhaft reduziert wird, so dass eine vorteilhafte Leichtbauweise sichergestellt werden kann.

Die in Bezug auf den ersten Aspekt genannten Ausführungsformen gelten ebenso als Ausführungsformen für die Gegenstände gemäß dem zweiten und dritten Aspekt. Die in Bezug auf den dritten Aspekt genannten Ausführungsformen gelten ebenso als Ausführungsformen für die Gegenstände gemäß dem ersten und zweiten Aspekt.

Weitere Ausführungsbeispiele werden Bezug nehmend auf die beiliegenden Figuren erläutert. Es zeigen:
- Fig. 1: eine perspektivische Ansicht einer Druckfluidbehälterhalterung gemäß einer Ausführungsform;
- Fig. 2: eine perspektivische Ansicht einer Aufnahmewanne einer Druckfluidbehälterhalterung gemäß einer Ausführungsform;
- Figs. 3A, 3B: perspektivische Ansichten von Aufnahmewannen einer Druckfluidbehälterhalterung gemäß weiterer Ausführungsformen;
- Fig. 4: eine perspektivische Ansicht einer Aufnahmewanne einer Druckfluidbehälterhalterung gemäß einer Ausführungsform;
- Figs. 5A, 5B: perspektivische Ansichten von Druckfluidbehälteraufnahmeelementen einer Druckfluidbehälterhalterung gemäß weiterer Ausführungsformen;
- Fig. 6: eine perspektivische Ansicht eines Druckfluidbehälteraufnahmeelements einer Druckfluidbehälterhalterung gemäß einer weiteren Ausführungsform;
- Figs. 7A, 7B: perspektivische Ansichten einer Aufnahmewanne einer Druckfluidbehälterhalterung gemäß einer Ausführungsform;
- Figs. 8A, 8B: perspektivische Ansichten einer Aufnahmewanne einer Druckfluidbehälterhalterung gemäß einer Ausführungsform;
- Figs. 9A, 9B: perspektivische Ansichten einer Aufnahmewanne einer Druckfluidbehälterhalterung gemäß einer Ausführungsform; und
- Fig. 10: eine schematische Darstellung eines Verfahrens zum Herstellen eines Druckfluidbehälteraufnahmeelements.

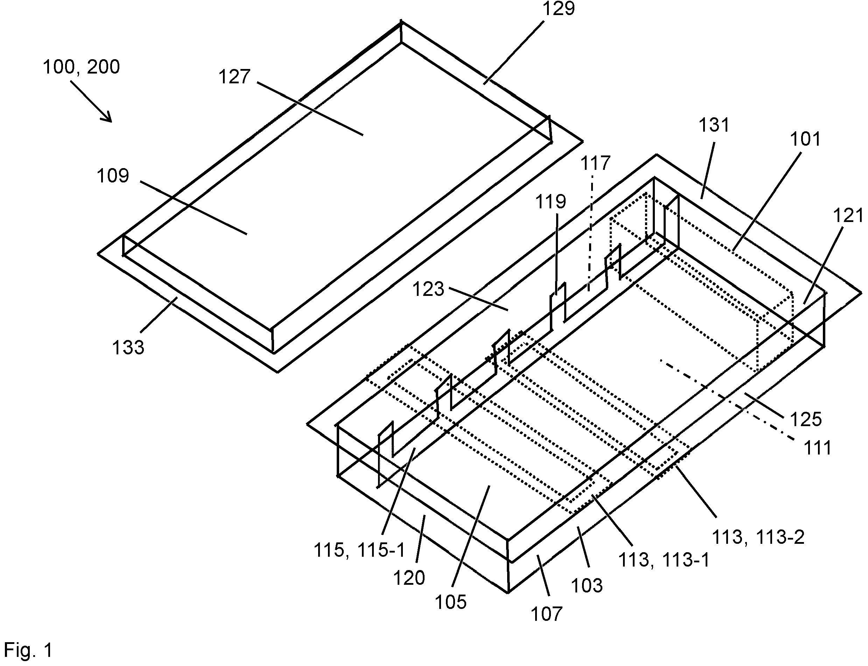

Fig. 1 zeigt eine perspektivische Ansicht einer Druckfluidbehälterhalterung gemäß einer Ausführungsform, insbesondere einer Druckfluidbehälterhalterung zum Aufnehmen einer Mehrzahl von Druckfluidbehältern in einem mit Fluid betriebenen Fahrzeug.

Das mit Fluid, insbesondere Gas betriebene Fahrzeug umfasst insbesondere ein elektrisch oder ein hybridelektrisch angetriebenes Fahrzeug bei dem die für den Betrieb notwendige elektrische Energie durch zumindest einen Elektromotor bereitgestellt wird. Zur Erzeugung der elektrischen Energie weist das elektrisch oder hybridelektrisch angetriebene Fahrzeug hierbei insbesondere eine Brennstoffzelle auf, in welcher das in den Druckfluidbehältern gespeicherte Fluid, insbesondere Gas, insbesondere Wasserstoff oder Methan, mit Sauerstoff umgesetzt wird, um die benötigte elektrische Energie für den zumindest einen Elektromotor bereitzustellen, um das Fahrzeug anzutreiben.

Alternativ kann das mit Fluid betriebene Fahrzeug auch ein Fahrzeug mit einem Verbrennungsmotor umfassen, in welchem das in den Druckfluidbehältern gespeicherte Fluid, insbesondere Gas, insbesondere Wasserstoff, Erdgas oder Methan, direkt verbrannt wird, um die für den Antrieb des Fahrzeugs benötigte Energie bereitzustellen.

In den entsprechenden Druckfluidbehältern wird das Fluid, insbesondere Gas unter hohem Druck, insbesondere in einer Größenordnung von mehreren 100 bar gespeichert, um eine für den Betrieb des Fahrzeugs ausreichende Menge von Fluid aufnehmen zu können.

Da das in den Druckfluidbehältern aufgenommene Fluid, insbesondere Gas, insbesondere Wasserstoff, Erdgas oder Methan, brennbar ist, muss eine Unfall-sichere Aufnahme der Druckfluidbehälter in dem Fahrzeug sichergestellt werden, um zu vermeiden, dass bei einem Unfall Fluid aus den Druckfluidbehältern entweicht.

Dies wird gemäß der vorliegenden Offenbarung durch die in Fig. 1 lediglich schematisch dargestellten Druckfluidbehälteranordnung 100 sichergestellt, welche zum Aufnehmen einer Mehrzahl von Druckfluidbehältern 101 ausgebildet ist, so dass die Druckfluidbehälteranordnung 100 zusammen mit den Druckfluidbehältern 101 ein in Fig. 1 schematisch dargestelltes Druckfluidbehältersystem 200 bilden.

Die Druckfluidbehälteranordnung 100 weist eine Aufnahmewanne 103 auf, wobei die Aufnahmewanne 103 eine Bodenplatte 105 und eine umlaufende Außenwand 107 aufweist, welche auf der Bodenplatte 105 oder die Bodenplatte 105 umlaufend angeordnet ist, wobei die Bodenplatte 105 und die umlaufende Außenwand 107 einstückig ausgebildet sind.

Die Druckfluidbehälteranordnung 100 weist einen Deckel 109 auf, welcher mit der umlaufenden Außenwand 107 verbunden ist, und einen in Fig. 1 lediglich schematisch dargestellten Innenraum 111 der Aufnahmewanne 103 abschließt.

Die Druckfluidbehälteranordnung 100 weist ferner zumindest einen in Fig. 1 lediglich schematisch dargestellten Verstärkungsträger 113 auf, welcher in dem Innenraum 111 der Aufnahmewanne 103 angeordnet ist, wobei der zumindest eine Verstärkungsträger 113 an der Aufnahmewanne 103 festgelegt ist.

Die Druckfluidbehälteranordnung 100 weist ferner zumindest ein Druckfluidbehälteraufnahmeelement 115 auf, welches in dem Innenraum 111 der Aufnahmewanne 103 angeordnet ist, wobei das Druckfluidbehälteraufnahmeelement 115 mit der Bodenplatte 105 und/oder umlaufenden Außenwand 107 der Aufnahmewanne 103 verbunden ist.

Das Druckfluidbehälteraufnahmeelement 115 weist eine Mehrzahl von Druckfluidbehälteraufnahmen 117 auf, wobei jeweils einer der Mehrzahl von Druckfluidbehälteraufnahmen 117 geformt ist, jeweils einen der Mehrzahl von Druckfluidbehältern 101 aufzunehmen.

Aus der Fig. 1 ist zu entnehmen, dass jeweils benachbarte Druckfluidbehälteraufnahmen 117 durch einen Trennsteg 119 des Druckfluidbehälteraufnahmeelements 115 voneinander getrennt sind, bzw. in anderen Worten ausgedrückt ist zwischen jeweils benachbarten Trennstegen 119 jeweils eine Druckfluidbehälteraufnahme 117 angeordnet.

Somit können die Druckfluidbehälter 101 vorteilhaft nebeneinander in den jeweiligen Druckfluidbehälteraufnahmen 117 aufgenommen werden.

Aus der Fig. 1 kann entnommen werden, dass die Druckfluidbehälteraufnahmen 117 jeweils eine Aufnahmekontur aufweisen, welche der Außenkontur der Druckfluidbehälter 101 entspricht. In der Fig. 1 weist der Druckfluidbehälter 101 eine mehreckige, insbesondere viereckige Außenkontur auf, und weist die Aufnahmekontur der Druckfluidbehälteraufnahmen 117 einen entsprechenden komplementären mehreckigen, insbesondere viereckigen Querschnitt auf. Es sind jedoch alternative Konturen durch die vorliegende Offenbarung umfasst.

Das Druckfluidbehälteraufnahmeelement 115 ist insbesondere als eine Druckfluidbehälteraufnahmeleiste 115-1 geformt, welche sich zwischen zwei gegenüberliegenden Seiten der umlaufenden Außenwand 107 erstreckt. Aus der Fig. 1 geht hervor, dass sich die Druckfluidbehälteraufnahmeleiste 115-1 zwischen einer Vorderseite 120 und einer gegenüberliegenden Rückseite 121 der umlaufenden Außenwand 107 erstreckt. Alternativ wäre es auch möglich, dass sich die Druckfluidbehälteraufnahmeleiste 115-1 zwischen einer ersten Lateralseite 123 und einer gegenüberliegenden zweiten Lateralseite 125 der umlaufenden Außenwand 107 erstreckt.

Insbesondere ist das Druckfluidbehälteraufnahmeelement 115 mit der umlaufenden Aufnahmewand 107 stoffschlüssig, insbesondere durch Schweißen oder Kleben, oder formschlüssig, insbesondere durch Nieten, oder kraftschlüssig, insbesondere durch Schrauben, verbunden.

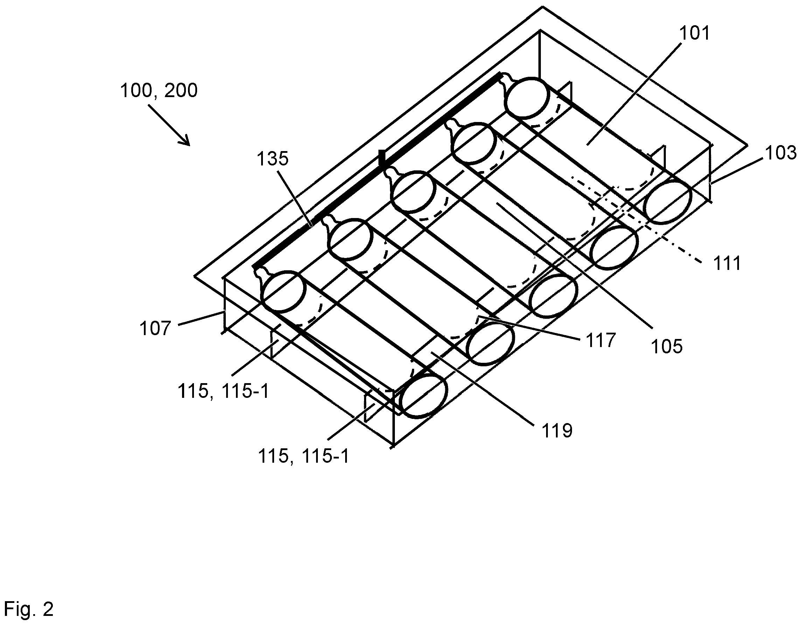

Auch wenn dies in Fig. 1 nicht dargestellt ist, kann die Druckfluidbehälterhalterung 100 eine Mehrzahl von Druckfluidbehälteraufnahmeelementen 115 aufweisen, welche nebeneinander in dem Innenraum 111 der Aufnahmewanne 103 angeordnet ist, wobei jeweils gegenüberliegende Druckfluidbehälteraufnahmen 117 der jeweiligen Druckfluidbehälteraufnahmeelemente 115 fluchtend zueinander angeordnet sind, um in den jeweils gegenüberliegende Druckfluidbehälteraufnahmen 117 jeweils einen Druckfluidbehälter 101 aufzunehmen. Somit kann der Druckfluidbehälter 101 an verschiedenen Bereichen durch die nebeneinander angeordneten Druckfluidbehälteraufnahmeelemente 115 stabilisiert sein. Für weitere Details hierzu wird auf die Fig. 2 verwiesen.

In der Fig. 1 ist ferner ein erster Verstärkungsträger 113-1 gezeigt, welcher mit der umlaufenden Außenwand 107, insbesondere mit den beiden Lateralseiten 123, 125, und insbesondere auch mit dem Deckel 109 verbunden ist, oder daran festgelegt ist.

In der Fig. 1 ist ferner ein zweiter Verstärkungsträger 113-2 gezeigt, welcher mit der Bodenplatte 105 und der umlaufenden Außenwand 107, insbesondere mit den beiden Lateralseiten 123, 125 verbunden ist, oder daran festgelegt ist.

Die Verstärkungsträger 113 sind hierbei insbesondere mit der umlaufenden Außenwand 107, der Bodenplatte 105 und/oder dem Deckel 109 stoffschlüssig, insbesondere durch eine Klebe- oder Schweißverbindung, oder formschlüssig, insbesondere durch ein Toleranzausgleichselement, verbunden.

Insbesondere können sich die Verstärkungsträger 113 auch zwischen einer Vorderseite 120 und einer Rückseite 121 der umlaufenden Außenwand 107 erstrecken.

Durch den ersten und zweiten Verstärkungsträger 113-1, 113-2 kann im Falle einer Unfallbedingten Krafteinwirkung auf die Druckfluidbehälterhalterung 100 eine wirksame Aufnahme von entsprechenden Kräften sichergestellt werden.

Der in Fig. 1 dargestellte Deckel 109 weist hierbei insbesondere eine Deckeloberseite 127 und eine umlaufende Deckelwand 129 auf, welche an der Deckeloberseite 127 oder die Deckeloberseite 127 umlaufend angeordnet ist, wobei die Deckeloberseite 127 und die umlaufende Deckelwand 129 einstückig ausgebildet sind, und wobei die umlaufende Deckelwand 129 mit der umlaufenden Außenwand 107 in einem geschlossenen Zustand der Druckfluidbehälterhalterung 100 verbunden ist.

Hierbei weist die umlaufende Deckelwand 129 insbesondere einen zweiten umlaufenden Befestigungsflansch 133 auf, welcher mit einem ersten umlaufenden Befestigungsflansch 131 der umlaufenden Außenwand 107 verbunden ist, insbesondere stoffschlüssig, formschlüssig, und/oder kraftschlüssig verbunden ist.

Zusammengefasst kann festgehalten werden, dass die Druckfluidbehälterhalterung 100 gemäß der vorliegenden Offenbarung einen wirksame Schutz der aufgenommenen Druckfluidbehälter 101 sicherstellt, so dass im Falle eines Unfalls des Fahrzeugs das Austreten von brennbarem Fluid aus den Druckfluidbehältern 101 verhindert wird. Zudem schützt die Druckfluidbehälterhalterung 100 die Druckfluidbehälter 101 vor Umwelteinflüssen, wie z.B. Wasser, und verhindert dadurch z.B. eine Korrosion der Druckfluidbehälter 101. Zudem kann die Druckfluidbehälterhalterung 100 flexibel an die sie umgebende Fahrzeugstruktur angebunden werden, so dass sich eine hohe Anzahl von Freiheitsgraden bei der Anordnung der Druckfluidbehälterhalterung 100 in dem Fahrzeug ergibt.

Durch die insbesondere einstückige Ausbildung des Deckels 109 und/oder durch die insbesondere einstückige Ausbildung der Bodenplatte 105 und der umlaufenden Außenwand 107 kann besonders einfache Herstellung sichergestellt werden.

Die Druckfluidbehälterhalterung 100 gemäß der vorliegenden Offenbarung kann in einer Vielzahl von unterschiedlichen Fahrzeugtypen, insbesondere PKWs und LKWs, eingesetzt werden.

Fig. 2 zeigt eine perspektivische Ansicht einer Aufnahmewanne einer Druckfluidbehälterhalterung gemäß einer Ausführungsform.

Die in Fig. 2 gezeigte Aufnahmewanne 103 entspricht der in Fig. 1 gezeigten Aufnahmewanne 103, bis darauf, dass die Druckfluidbehälter 101 eine kreisförmige Außenkontur aufweisen, und dass auch die Druckfluidbehälteraufnahmen 117 der Druckfluidbehälteraufnahmeelemente 115 eine entsprechend komplementäre Aufnahmekontur mit einem halbkreisförmigen Querschnitt aufweisen.

Zudem sind in der Fig. 2 zwei nebeneinander angeordnete Druckaufnahmeelemente 115, insbesondere Druckaufnahmeleisten 115-1, dargestellt, welche den Druckfluidbehälter 101 an unterschiedlichen Bereichen stabilisieren. Hierbei sind die jeweils gegenüberliegenden Druckfluidbehälteraufnahmen 117 der jeweiligen Druckfluidbehälteraufnahmeelemente 115 fluchtend zueinander angeordnet, um in den jeweils gegenüberliegenden Druckfluidbehälteraufnahmen 117 jeweils einen Druckfluidbehälter 101 aufzunehmen.

Aus der Fig. 2 ist ferner eine Druckanschlussleitung 135 zu entnehmen, welche zumindest abschnittsweise in dem Innenraum 111 der Aufnahmewanne 103 angeordnet ist, und welche ausgebildet ist, eine Anschlussverbindung zu den Druckfluidbehältern 101 bereitzustellen. Hierbei ist die Druckanschlussleitung 135 insbesondere an der umlaufenden Außenwand 107 angeordnet und ist insbesondere durch einen in Fig. 2 lediglich schematisch dargestellten Leitungsdurchbruch des in Fig. 2 nicht dargestellten Deckels 109 geführt, um Zu- bzw. Ableitung von Fluid aus den, bzw. in die Druckfluidbehältern 101 sicherzustellen.

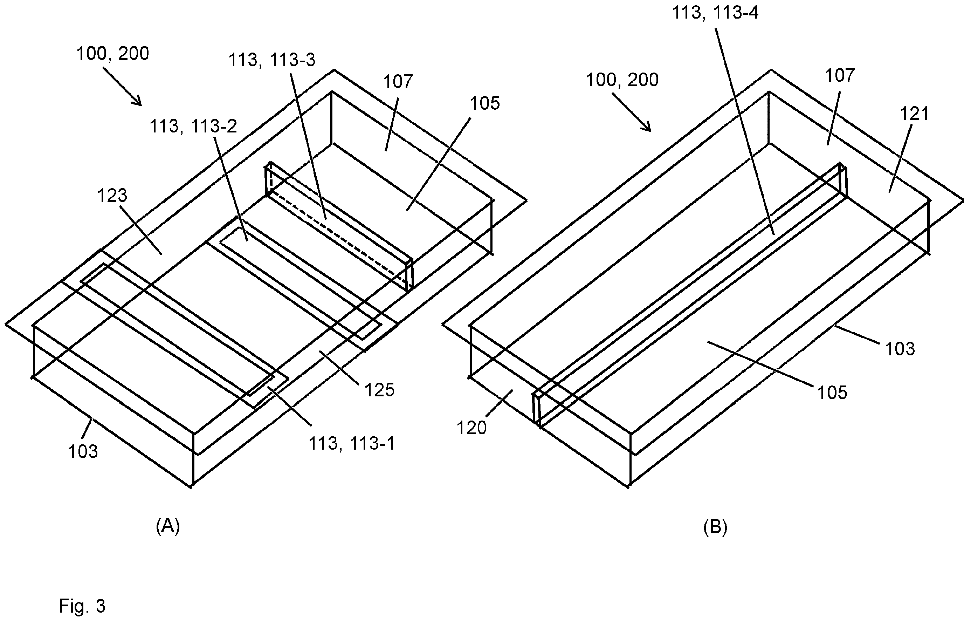

Die Figuren 3A, 3B zeigen perspektivische Ansichten von Aufnahmewannen einer Druckfluidbehälterhalterung gemäß weiterer Ausführungsformen.

In den Figuren 3A und 3B sind unterschiedliche Varianten von Verstärkungsträger 113 in der Aufnahmewanne 103 dargestellt, wobei die Druckfluidbehälter 101 und die Druckfluidbehälteraufnahmeelemente 115, insbesondere Druckfluidbehälteraufnahmeleisten 115-1, in den Figuren 3A und 3B nicht dargestellt sind.

Ein in Fig. 3A dargestellter erster Verstärkungsträger 113, 113-1 ist an der umlaufenden Außenwand 107 der Aufnahmewanne 103 festgelegt und erstreckt sich zwischen einer ersten und zweiten Lateralseite 123, 125 der umlaufenden Außenwand 107.

Ein in Fig. 3A dargestellter zweiter Verstärkungsträger 113, 113-2 ist an der Bodenplatte 105 der Aufnahmewanne 103 festgelegt und erstreckt sich zwischen der ersten und zweiten Lateralseite 123, 125 der umlaufenden Außenwand 107.

Ein in Fig. 3A dargestellter dritter Verstärkungsträger 113, 113-3 ist an der umlaufenden Außenwand 107 und an der Bodenplatte 105 der Aufnahmewanne 103 festgelegt und erstreckt sich zwischen der ersten und zweiten Lateralseite 123, 125 der umlaufenden Außenwand 107.

Ein in Fig. 3B dargestellter vierter Verstärkungsträger 113, 113-4 ist an der umlaufenden Außenwand 107 und an der Bodenplatte 105 der Aufnahmewanne 103 festgelegt und erstreckt sich zwischen einer Vorderseite 120 und einer Rückseite 121 der umlaufenden Außenwand 107.

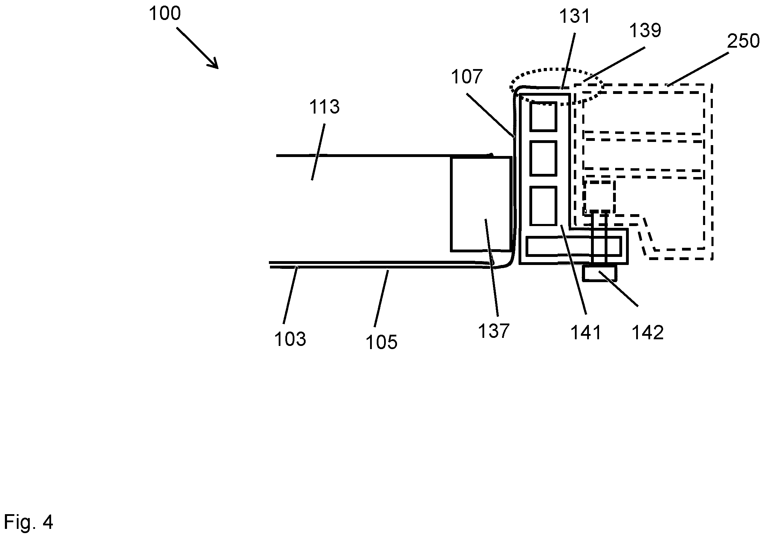

Fig. 4 zeigt eine perspektivische Ansicht einer Aufnahmewanne einer Druckfluidbehälterhalterung gemäß einer Ausführungsform.

In der Fig. 4 ist ein Querschnitt durch die Aufnahmewanne 103 der Druckfluidbehälterhalterung 100 dargestellt, wobei ein Verstärkungsträger 113 hierbei durch ein Toleranzausgleichselement 137 mit der umlaufenden Außenwand 107 der Aufnahmewanne 103 verbunden ist. Zudem weist die Druckfluidbehälterhalterung 100 ein Hohlprofil 141 an der Außenseite der umlaufenden Außenwand 107 der Aufnahmewanne 103 auf.

Wie aus der Fig. 4 ersichtlich ist, ist das Hohlprofil 141 über einen ersten umlaufenden Befestigungsflansch 131 an der umlaufenden Außenwand 107 der Aufnahmewanne 103 befestigt. Über das Hohlprofil 141 kann die Druckfluidbehälterhalterung 100 am Kraftfahrzeug, insbesondere an einem Seitenschweller 250 oder an einem Sitzquerträger, zum Beispiel über Befestigungselemente 142, befestigt werden und dient gleichzeitigt der Crashsicherheit.

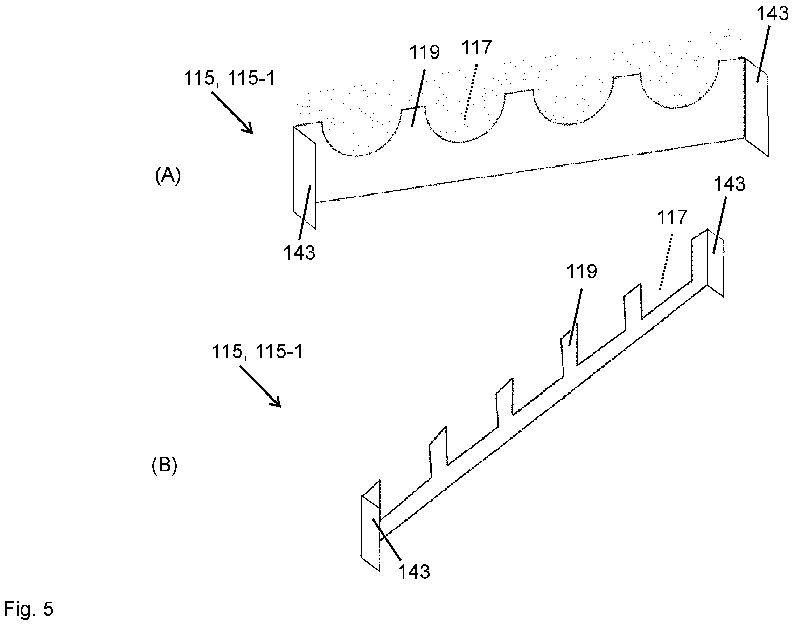

Die Figuren 5A und 5B zeigen perspektivische Ansichten von Druckfluidbehälteraufnahmeelementen einer Druckfluidbehälterhalterung gemäß weiterer Ausführungsformen.

Das in Fig. 5A dargestellte Druckfluidbehälteraufnahmeelement 115 entspricht dem in Fig. 2 dargestellten Druckfluidbehälteraufnahmeelement 115, insbesondere Druckfluidbehälteraufnahmeleiste 115-1, wobei hierbei die Druckfluidbehälteraufnahmen 117 jeweils eine Aufnahmekontur mit einem halbkreisförmigen Querschnitt aufweisen, um einen Druckfluidbehälter 101 mit einer runden Außenkontur aufzunehmen.

Das in Fig. 5B dargestellte Druckfluidbehälteraufnahmeelement 115 entspricht dem in Fig. 1 dargestellten Druckfluidbehälteraufnahmeelement 115 insbesondere Druckfluidbehälteraufnahmeleiste 115-1, wobei hierbei die Druckfluidbehälteraufnahmen 117 jeweils eine Aufnahmekontur mit einer mehreckigen, insbesondere viereckigen, Querschnitt aufweisen, um einen Druckfluidbehälter 101 mit einer mehreckigen, insbesondere viereckigen, Außenkontur aufzunehmen.

Sowohl das in Fig. 5A als auch das in Fig. 5B dargestellte Druckfluidbehälteraufnahmeelement 115 weist endseitig einen Befestigungsabschnitt 143 auf, wobei sich der jeweilige Befestigungsabschnitt 143 insbesondere winklig zu dem jeweiligen Druckfluidbehälteraufnahmeelement 115 erstreckt, wobei der jeweilige Befestigungsabschnitt 143 mit der in den Figuren 5A und 5B nicht dargestellten umlaufenen Außenwand 107 der Aufnahmewanne 103 verbunden ist.

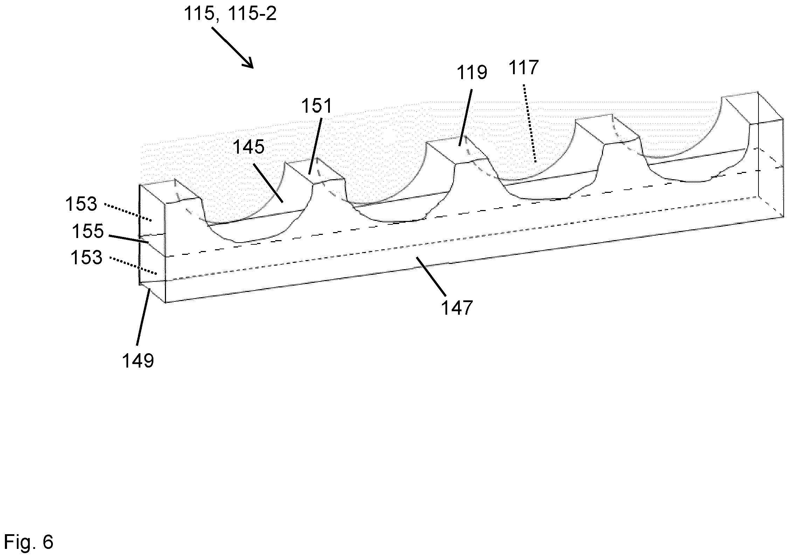

Fig. 6 zeigt eine perspektivische Ansicht eines Druckfluidbehälteraufnahmeelements einer Druckfluidbehälterhalterung gemäß einer weiteren Ausführungsform.

Das in Fig. 6 schematisch dargestellte Druckfluidbehälteraufnahmeelement 115 entspricht im Wesentlichen dem in Fig. 2 und Fig. 5A dargestellten Druckfluidbehälteraufnahmeelement 115 mit einer Aufnahmekontur mit einem halbkreisförmigen Querschnitt.

Allerdings ist das in Fig. 6 dargestellte Druckfluidbehälteraufnahmeelement 115 nicht als eine Druckfluidbehälteraufnahmeliste 115-1, sondern als ein Druckfluidbehälteraufnahmehohlkörper 115-2 geformt.

Der Druckfluidbehälteraufnahmehohlkörper 115-2 weist hierbei eine erste Hohlkörperlateralwandung 145, eine der ersten Hohlkörperlateralwandung 145 gegenüberliegende zweite Hohlkörperlateralwandung 147, eine Hohlkörperbodenwandung 149 und eine der Hohlkörperbodenwandung 149 gegenüberliegende Hohlkörperoberwandung 151 auf, welche einen Hohlkörperinnenraum 153 des Druckfluidbehälteraufnahmehohlkörpers 115-2 begrenzen.

Wie aus der Fig. 6 hervorgeht, ist der Druckfluidbehälteraufnahmehohlkörper 115-2 endseitig offen.

Insbesondere weist der Druckfluidbehälteraufnahmehohlkörper 115-2 einen einzigen Hohlkörperinnenraum 153 oder weist der Druckfluidbehälteraufnahmehohlkörper 115-2, wie in der Fig. 6 dargestellt, zwei Hohlkörperinnenräume 153 auf, welche durch eine Hohlkörperzwischenwandung 155 voneinander abgetrennt sind.

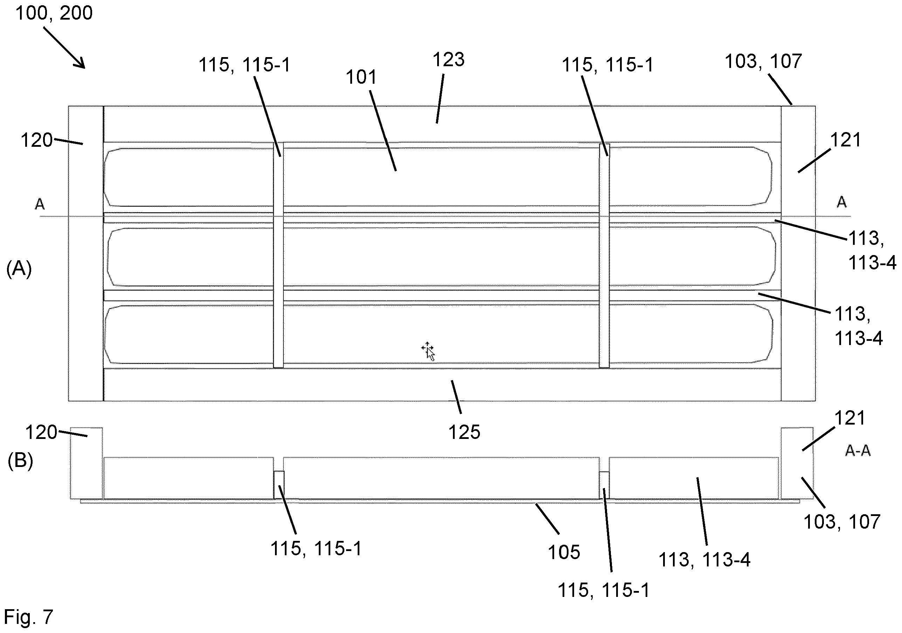

Die Figuren 7A und 7B zeigen perspektivische Ansichten einer Aufnahmewanne einer Druckfluidbehälterhalterung gemäß einer Ausführungsform.

Hierbei zeigt die Fig. 7A eine Aufsicht auf eine offene Aufnahmewanne 103 einer Druckfluidbehälterhalterung 100 mit drei aufgenommenen Druckfluidbehältern 101, und zeigt die Fig. 7B eine Schnittansicht durch die Aufnahmewanne 103 entlang der Achse A-A.

In der Aufnahmewanne 103, insbesondere an der Bodenplatte 105, sind zwei Druckbehälteraufnahmeelemente 115, 115-1 angeordnet, welche sich zwei gegenüberliegenden Lateralseiten 123, 125 der umlaufenden Außenwand 107 erstrecken.

Die Druckbehälteraufnahmeelemente 115, 115-1 weist jeweils drei in Fig. 7A und 7B nicht dargestellte Druckbehälteraufnahmen 117 auf, wobei in jeweils einer der jeweils drei Druckbehälteraufnahmen 117 jeweils ein Druckfluidbehälter 101 aufgenommen ist. Wie aus der Fig. 7A und 7B ersichtlich ist, erstrecken sich die Druckfluidbehälter 101 zwischen der Vorderseite 120 und Rückseite 121 der umlaufenden Außenwand 107.

Die Druckfluidbehälterhalterung 100 weist hierbei zwei sich parallel zu den Druckfluidbehältern 101 erstreckende Verstärkungsträger 113-4 auf, welche insbesondere mit der Bodenplatte 105 verbunden sind, und welche sich zwischen der Vorderseite 120 und der Rückseite 121 der umlaufenden Außenwand 107 erstrecken.

Auch wenn dies in der Fig. 7A und 7B nicht dargestellt ist, weisen die Verstärkungsträger 113-4 an den jeweiligen Kreuzungspunkten mit den Druckbehälteraufnahmeelementen 115, 115-1 jeweils eine Aussparung auf, durch welche das jeweilige Druckbehälteraufnahmeelement 115, 115-1 geführt ist. Trotz der Aussparungen bilden die Verstärkungsträger 113-4 einen durchgängigen Lastpfad zur Aufnahme von auf die Aufnahmewanne 103 wirkenden Längskräften.

Auch wenn dies in Figuren 7A und 7B nicht dargestellt ist, kann in einer alternativen Ausführungsform die Erstreckungsrichtung der Druckfluidbehälter 101, der Verstärkungsträger 113-4 und der Druckbehälteraufnahmeelemente 115, 115-1 um 90° gedreht sein. In diesem Fall erstrecken sich zwölf kurze Druckfluidbehälter 101 in sechs Reihen und zwei Spalten, sowie die dazu parallel angeordneten Verstärkungsträger 113-4 zwischen den beiden Lateralseiten 123, 125 und erstrecken sich die dazu parallel angeordneten Druckbehälteraufnahmeelemente 115, 115-1 zwischen der Vorderseite 120 und der Rückseite 121.

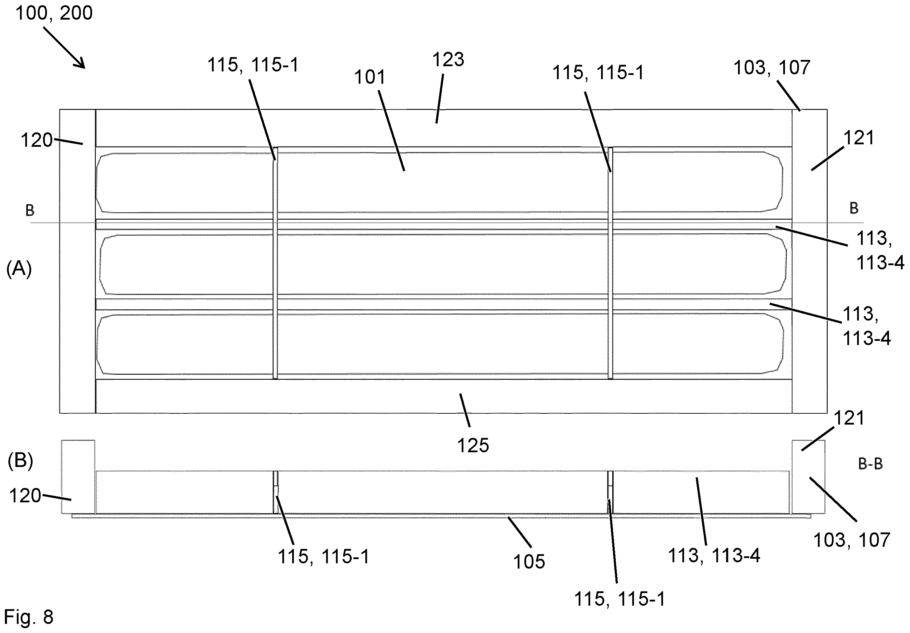

Die Figuren 8A und 8B zeigen perspektivische Ansichten einer Aufnahmewanne einer Druckfluidbehälterhalterung gemäß einer Ausführungsform.

Hierbei zeigt die Fig. 8A eine Aufsicht auf eine offene Aufnahmewanne 103 einer Druckfluidbehälterhalterung 100 mit drei aufgenommenen Druckfluidbehältern, und zeigt die Fig. 8B eine Schnittansicht durch die Aufnahmewanne 103 entlang der Achse B-B.

In der Aufnahmewanne 103, insbesondere an der Bodenplatte 105, sind zwei Druckbehälteraufnahmeelemente 115, 115-1 angeordnet, welche sich zwei gegenüberliegenden Lateralseiten 123, 125 der umlaufenden Außenwand 107 erstrecken.

Die Druckbehälteraufnahmeelemente 115, 115-1 weist jeweils drei in Fig. 8A und 8B nicht dargestellte Druckbehälteraufnahmen 117 auf, wobei in jeweils einer der jeweils drei Druckbehälteraufnahmen 117 jeweils ein Druckfluidbehälter 101 aufgenommen ist. Wie aus der Fig. 8A und 8B ersichtlich ist, erstrecken sich die Druckfluidbehälter 101 zwischen der Vorderseite 120 und Rückseite 121 der umlaufenden Außenwand 107.

Die Druckfluidbehälterhalterung 100 weist hierbei zwei sich parallel zu den Druckfluidbehältern 101 erstreckende Verstärkungsträger 113-4 auf, welche insbesondere mit der Bodenplatte 105 verbunden sind, und welche sich zwischen der Vorderseite 120 und der Rückseite 121 der umlaufenden Außenwand 107 erstrecken.

Auch wenn dies in der Fig. 8A und 8B nicht dargestellt ist, sind die Verstärkungsträger 113-4 an den jeweiligen Kreuzungspunkten mit den Druckbehälteraufnahmeelemente 115, 115-1 jeweils unterbrochen, damit das jeweilige Druckbehälteraufnahmeelement 115, 115-1 durch die Unterbrechung geführt werden kann. Hierbei wird der Lastpfad zur Aufnahme von auf die Aufnahmewanne 103 wirkenden Längs- und Querkräften durch die Verstärkungsträger 113-4 und die Druckbehälteraufnahmeelemente 115, 115-1 gebildet.

Auch wenn dies in Figuren 8A und 8B nicht dargestellt ist, kann in einer alternativen Ausführungsform die Erstreckungsrichtung der Druckfluidbehälter 101, der Verstärkungsträger 113-4 und der Druckbehälteraufnahmeelemente 115, 115-1 um 90° gedreht sein. In diesem Fall erstrecken sich zwölf kurze Druckfluidbehälter 101 in sechs Reihen und zwei Spalten, sowie die dazu parallel angeordneten Verstärkungsträger 113-4 zwischen den beiden Lateralseiten 123, 125 und erstrecken sich die dazu quer angeordneten Druckbehälteraufnahmeelemente 115, 115-1 zwischen der Vorderseite 120 und der Rückseite 121.

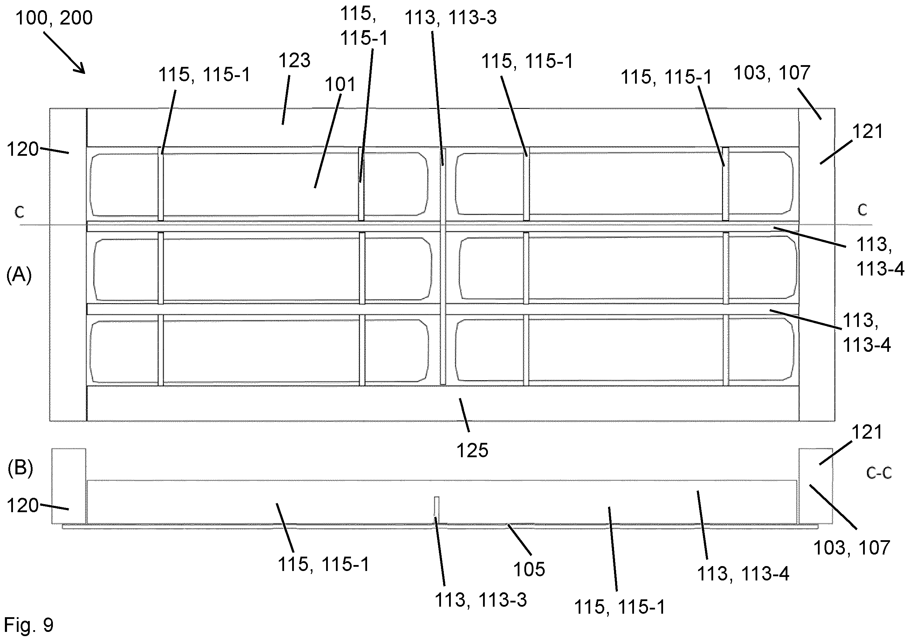

Die Figuren 9A und 9B zeigen perspektivische Ansichten einer Aufnahmewanne einer Druckfluidbehälterhalterung gemäß einer Ausführungsform.

Hierbei zeigt die Fig. 9A eine Aufsicht auf eine offene Aufnahmewanne 103 einer Druckfluidbehälterhalterung 100 mit sechs aufgenommenen Druckfluidbehältern 101, und zeigt die Fig. 9B eine Schnittansicht durch die Aufnahmewanne 103 entlang der Achse C-C.

Die Druckfluidbehälterhalterung 100 weist hierbei zwei sich parallel zu den Druckfluidbehältern 101 erstreckende Verstärkungsträger 113-4 auf, welche insbesondere mit der Bodenplatte 105 verbunden sind, und welche sich zwischen der Vorderseite 120 und der Rückseite 121 der umlaufenden Außenwand 107 durchgehend erstrecken und einen Lastpfad bilden.

Zudem weist die Druckfluidbehälterhalterung 100 einen sich quer zu den Druckfluidbehältern 101 erstreckenden weiteren Verstärkungsträger 113-4 auf, welcher insbesondere mit der Bodenplatte 105 verbunden sind, und welcher sich zwischen der ersten Lateralseite 123 und der zweiten Lateralseite 125 der umlaufenden Außenwand 107 erstreckt.

Wie aus der Fig. 9B hervorgeht, weisen die sich parallel zu den Druckfluidbehältern 101 erstreckenden Verstärkungsträger 113-4 jeweils eine Aussparung auf, durch welche der sich quer zu den Druckfluidbehältern 101 erstreckende Verstärkungsträger 113-4 geführt ist.

In der Aufnahmewanne 103, insbesondere an der Bodenplatte 105, sind zwölf Druckbehälteraufnahmeelemente 115, 115-1 angeordnet.

Die Druckbehälteraufnahmeelemente 115, 115-1 weisen jeweils nur eine in Fig. 9A und 9B nicht dargestellte Druckbehälteraufnahme 117 auf, in welcher jeweils ein Druckfluidbehälter 101 aufgenommen ist. Die Druckbehälteraufnahmeelemente 115, 115-1 sind jeweils an den Lateralseiten 123, 125, bzw. an den sich parallel zu den Druckfluidbehältern 101 erstreckenden Verstärkungsträger 113-4 endseitig festgelegt.

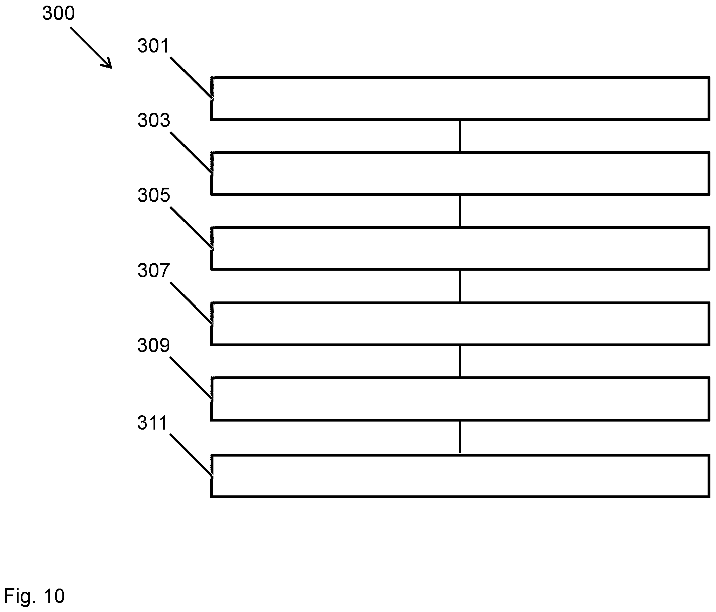

Fig. 10 zeigt eine schematische Darstellung eines Verfahrens zum Herstellen eines Druckfluidbehälteraufnahmeelements.

Das Verfahren 300 umfasst als einen Verfahrensschritt das einstückige Formen 301 einer Aufnahmewanne 103 aus einem ersten Halbzeug 157, wobei die Aufnahmewanne 103 eine Bodenplatte 105 und eine umlaufende Außenwand 107 aufweist, welche auf der Bodenplatte 105 oder die Bodenplatte 105 umlaufend angeordnet ist, wobei die Bodenplatte 105 und die umlaufende Außenwand 107 einstückig ausgebildet sind.

Das Verfahren 300 umfasst als einen weiteren Verfahrensschritt das Formen 203 zumindest eines Verstärkungsträgers 113 aus einem zweiten Halbzeug.

Das Verfahren 300 umfasst als einen weiteren Verfahrensschritt das Festlegen 205 des Verstärkungsträgers 113 an der Aufnahmewanne 103.

Das Verfahren 300 umfasst als einen weiteren Verfahrensschritt das Formen 207 zumindest eines Druckfluidbehälteraufnahmeelements 115 mit zumindest einer Druckfluidbehälteraufnahme 117 aus einem dritten Halbzeug.

Das Verfahren 300 umfasst als einen weiteren Verfahrensschritt das Verbinden 209 des zumindest eines Druckfluidbehälteraufnahmeelements 115 mit der Bodenplatte 105 der Aufnahmewanne 103.

Das Verfahren 300 umfasst als einen weiteren Verfahrensschritt das Formen 211, insbesondere einstückiges Formen 211 eines Deckels 109 aus einem dritten Halbzeug.

### Bezugszeichenliste

100 Druckfluidbehälterhalterung
101 Druckfluidbehälter
103 Aufnahmewanne
105 Bodenplatte
107 Umlaufende Außenwand
109 Deckel
111 Innenraum
113 Verstärkungsträger
113-1 Erster Verstärkungsträger
113-2 Zweiter Verstärkungsträger
113-3 Dritter Verstärkungsträger
113-4 Vierter Verstärkungsträger
115 Druckfluidbehälteraufnahmeelement
115-1 Druckfluidbehälteraufnahmeleiste
115-2 Druckfluidbehälteraufnahmehohlkörper
117 Druckfluidbehälteraufnahme
119 Trennsteg
120 Vorderseite
121 Rückseite
123 Erste Lateralseite
125 Zweite Lateralseite
127 Deckeloberseite
129 Umlaufende Deckelwand
131 Ersten umlaufenden Befestigungsflansch
133 Zweiten umlaufenden Befestigungsflansch
135 Druckanschlussleitung
137 Toleranzausgleichselement
139 Befestigungsbereich
141 Hohlprofil
142 Befestigungselement
143 Befestigungsabschnitt
145 Erste Hohlkörperlateralwandung
147 Zweite Hohlkörperlateralwandung
149 Hohlkörperbodenwandung
151 Hohlkörperoberwandung
153 Hohlkörperinnenraum
155 Hohlkörperzwischenwandung
157 Erstes Halbzeug
159 Wellenförmige Erhebungen
250 Seitenschweller
200 Druckfluidbehälteraufnahmesystem
300 Verfahren zum Herstellen eines Druckfluidbehälteraufnahmeelements
301 Verfahrensschritt: Einstückiges Formen einer Aufnahmewanne
303 Verfahrensschritt: Formen zumindest eines Verstärkungsträgers
305 Verfahrensschritt: Festlegen des Verstärkungsträgers an der Aufnahmewanne 307 Verfahrensschritt: Formen zumindest eines Druckfluidbehälteraufnahmeelements
309 Verfahrensschritt: Verbinden des Druckfluidbehälteraufnahmeelements mit der Bodenplatte der Aufnahmewanne
311 Verfahrensschritt: Formen eines Deckels

## Patentansprüche

1. Druckfluidbehälterhalterung (100) zum Aufnehmen zumindest eines Druckfluidbehälters (101) in einem mit Fluid betriebenen Fahrzeug, mit:
einer Aufnahmewanne (103), wobei die Aufnahmewanne (103) eine Bodenplatte (105) und eine umlaufende Außenwand (107) aufweist, welche auf der Bodenplatte (105) oder die Bodenplatte (105) umlaufend angeordnet ist, wobei die Bodenplatte (105) und die umlaufende Außenwand (107) einstückig ausgebildet sind,
zumindest einem Verstärkungsträger (113, 113-1, 113-2, 113-3, 113-4), welcher an der Aufnahmewanne (103) festgelegt ist und sich zwischen zwei gegenüberliegenden Seiten (120, 121, 123, 125) der umlaufenden Außenwand (107) erstreckt, und
zumindest einem Druckfluidbehälteraufnahmeelement (115, 115-1, 115-2), welches in dem Innenraum (111) der Aufnahmewanne (103) angeordnet ist, wobei das Druckfluidbehälteraufnahmeelement (115, 115-1, 115-2) mit der Bodenplatte (105) und/oder der umlaufenden Außenwand (107) der Aufnahmewanne (103) verbunden ist,
wobei das Druckfluidbehälteraufnahmeelement (115, 115-1, 115-2) zumindest eine Druckfluidbehälteraufnahme (117) aufweist, wobei die zumindest eine Druckfluidbehälteraufnahme (117) geformt ist, zumindest einen Druckfluidbehälter (101) aufzunehmen,
**dadurch gekennzeichnet, dass**
an einem Außenbereich der umlaufenden Außenwand (107) der Aufnahmewanne (103) wenigstens ein Hohlprofil (141) befestigt ist, und dass
das Hohlprofil (141) ein Hohlkammerprofil ist, welches als Deformationselement zum Schutz der Aufnahmewanne (103), des Innenraums (111) und der Druckfluidbehälter (101) vor unfallbedingter Beschädigung dient, wobei das Hohlprofil (141) zur Befestigung der Druckfluidbehälterhalterung (100) an dem Kraftfahrzeug dient.

2. Druckfluidbehälterhalterung (100) nach Anspruch 1, wobei das Druckfluidbehälteraufnahmeelement (115, 115-1, 115-2) eine Mehrzahl von Druckfluidbehälteraufnahmen (117) aufweist, wobei die Druckfluidbehälteraufnahmen (117) geformt sind, eine Mehrzahl von Druckfluidbehältern (101) aufzunehmen, wobei jeweils benachbarte Druckfluidbehälteraufnahmen (117) insbesondere durch einen Trennsteg (119) des Druckfluidbehälteraufnahmeelements (115, 115-1, 115-2) voneinander getrennt sind.

3. Druckfluidbehälterhalterung (100) nach Anspruch 1 oder 2, wobei die Druckfluidbehälteraufnahme (117) jeweils eine Aufnahmekontur aufweist, welche jeweils komplementär zu einer Außenkontur des Druckfluidbehälters (101) geformt ist, wobei die Aufnahmekontur insbesondere einen mehreckigen oder kreisförmigen Querschnitt aufweist.

4. Druckfluidbehälterhalterung (100) nach einem der vorangehenden Ansprüche, wobei das Druckfluidbehälteraufnahmeelement (115, 115-1, 115-2) als eine Druckfluidbehälteraufnahmeleiste (115-1) oder als ein Druckfluidbehälteraufnahmehohlkörper (115-2) geformt ist, welche oder welcher sich zwischen zwei gegenüberliegenden Seiten, insbesondere einer Vorderseite (120) und einer der Vorderseite (120) gegenüberliegenden Rückseite (121) oder einer ersten Lateralseite (123) und einer der ersten Lateralseite (123) gegenüberliegenden zweiten Lateralseite (125), der umlaufenden Außenwand (107) erstreckt, und wobei die Druckfluidbehälteraufnahmeleiste (115-1) oder der Druckfluidbehälteraufnahmehohlkörper (115-2) insbesondere an der umlaufenden Außenwand (107) festgelegt ist.

5. Druckfluidbehälterhalterung (100) nach einem der vorangehenden Ansprüche, wobei die Druckfluidbehälterhalterung (100) eine Mehrzahl von Druckfluidbehälteraufnahmeelementen (115, 115-1, 115-2) aufweist, welche nebeneinander in dem Innenraum (111) der Aufnahmewanne (103) angeordnet ist, wobei jeweils gegenüberliegende Druckfluidbehälteraufnahmen (117) der jeweiligen Druckfluidbehälteraufnahmeelemente (115, 115-1, 115-2) fluchtend zueinander angeordnet sind, um in den jeweils gegenüberliegende Druckfluidbehälteraufnahmen (117) jeweils einen Druckfluidbehälter (101) aufzunehmen.

6. Druckfluidbehälterhalterung (100) nach einem der vorangehenden Ansprüche, wobei die Druckfluidbehälterhalterung (100) einen Deckel (109) aufweist, welcher mit der umlaufenden Außenwand (107) verbunden ist, und einen Innenraum (111) der Aufnahmewanne (103) abschließt.

7. Druckfluidbehälterhalterung (100) nach einem der vorangehenden Ansprüche, wobei der zumindest eine Verstärkungsträger (113, 113-1, 113-2, 113-3, 113-4) mit der Bodenplatte (105), der umlaufenden Außenwand (107) und/oder dem Deckel (109) der Aufnahmewanne (103) verbunden ist, oder wobei der zumindest eine Verstärkungsträger (113, 113-1, 113-2, 113-3, 113-4) an der Bodenplatte (105), der umlaufenden Außenwand (107) und/oder dem Deckel (109) der Aufnahmewanne (103) durch ein Toleranzausgleichelement (137) festgelegt ist.

8. Druckfluidbehälterhalterung (100) nach einem der vorangehenden Ansprüche, wobei die umlaufende Außenwand (107) eine Vorderseite (120), eine der Vorderseite (120) gegenüberliegende Rückseite (121), eine erste Lateralseite (123), und eine der ersten Lateralseite (123) gegenüberliegende zweite Lateralseite (125) umfasst, wobei sich der zumindest eine Verstärkungsträger (113, 113-1, 113-2, 113-3, 113-4) zwischen der Vorderseite (120) und der Rückseite (121) und/oder zwischen der ersten Lateralseite (123) und der zweiten Lateralseite (125) der umlaufenden Außenwand (107) erstreckt.

9. Druckfluidbehälterhalterung (100) nach einem der Ansprüche 6 bis 8, wobei der Deckel (109) eine Deckeloberseite (127) und eine umlaufende Deckelwand (129) aufweist, welche an der Deckeloberseite (127) oder die Deckeloberseite (127) umlaufend angeordnet ist, wobei die Deckeloberseite (127) und die umlaufende Deckelwand (129) einstückig ausgebildet sind, und wobei die umlaufende Deckelwand (129) mit der umlaufenden Außenwand (107) verbunden ist.

10. Druckfluidbehälterhalterung (100) nach einem der Ansprüche 6 bis 9, wobei die umlaufenden Außenwand (107) einen ersten umlaufenden Befestigungsflansch (131) aufweist, wobei der Deckel (109), insbesondere die umlaufende Deckelwand (129), einen zweiten umlaufenden Befestigungsflansch (133) aufweist, welcher mit dem ersten umlaufenden Befestigungsflansch (131) verbunden ist, um den Deckel (109) mit der umlaufenden Außenwand (107) zu verbinden.

11. Druckfluidbehälterhalterung (100) nach einem der vorangehenden Ansprüche, mit einer Druckanschlussleitung (135), welche zumindest abschnittsweise in dem Innenraum (111) der Aufnahmewanne (103) angeordnet ist, und welche ausgebildet ist, eine Anschlussverbindung zu dem Druckfluidbehälter bereitzustellen, wobei die Aufnahmewanne (103), insbesondere die Bodenplatte (105), die umlaufende Außenwand (107) und/oder der Deckel (109), einen Leitungsdurchbruch aufweist, durch welchen die Druckanschlussleitung (135) aus dem Innenraum (111) der Aufnahmewanne (103) geführt ist.

12. Druckfluidbehälterhalterung (100) nach einem der vorangehenden Ansprüche, wobei an einem Außenbereich der Außenwand (107), insbesondere unterhalb eines ersten umlaufenden Befestigungsflansches (131) ein Befestigungsbereich (139) geformt ist, welcher ausgebildet ist, die Aufnahmewanne (103) an einem Fahrzeugbauteil (141), insbesondere an einem Sitzquerträger, zu befestigen.

13. Druckfluidbehälterhalterung (100) nach einem der vorangehenden Ansprüche, wobei die einstückig ausgebildete Bodenplatte (105) und umlaufende Außenwand (107), und/oder der Deckel (109) als ein Tiefziehbauteil, Faltbauteil, Warmumformbauteil oder Hydroformbauteil geformt sind.

14. Verfahren (300) zum Herstellen einer Druckfluidbehälterhalterung (100) zum Aufnehmen zumindest eines Druckfluidbehälters (101) in einem mit Fluid betriebenen Fahrzeug, wobei das Verfahren (300) die folgenden Verfahrensschritte umfasst:
Einstückiges Formen (311) einer Aufnahmewanne (103) aus einem ersten Halbzeug, wobei die Aufnahmewanne (103) eine Bodenplatte (105) und eine umlaufende Außenwand (107) aufweist, welche auf der Bodenplatte (105) oder die Bodenplatte (105) umlaufend angeordnet ist, wobei die Bodenplatte (105) und die umlaufende Außenwand (107) einstückig ausgebildet sind,
Formen (303) zumindest eines Verstärkungsträgers (113, 113-1, 113-2, 113-3, 113-4) aus einem zweiten Halbzeug,
Festlegen (305) des Verstärkungsträgers (113, 113-1, 113-2, 113-3, 113-4) an der Aufnahmewanne (103),
Formen (307) zumindest eines Druckfluidbehälteraufnahmeelements (115, 115-1, 115-2) mit zumindest einer Druckfluidbehälteraufnahme (117) aus einem dritten Halbzeug,
Verbinden (309) des zumindest einen Druckfluidbehälteraufnahmeelements (115, 115-1, 115-2) mit der Bodenplatte (105) der Aufnahmewanne (103), und
Formen (311), insbesondere einstückiges Formen (203) eines Deckels (109) aus einem weiteren dritten Halbzeug,
**dadurch gekennzeichnet, dass**
an einem Außenbereich der umlaufenden Außenwand (107) der Aufnahmewanne (103) wenigstens ein Hohlprofil (141) befestigt ist, und dass
das Hohlprofil (141) ein Hohlkammerprofil ist, welches als Deformationselement zum Schutz der Aufnahmewanne (103), des Innenraums (111) und der Druckfluidbehälter (101) vor unfallbedingter Beschädigung dient, wobei das Hohlprofil (141) zur Befestigung der Druckfluidbehälterhalterung (100) an dem Kraftfahrzeug dient.

15. Verfahren (300) nach Anspruch 14, wobei das einstückige Formen (201) der Aufnahmewanne (103) und/oder das Formen (211) des Deckels (109) ein Tiefziehprozess, einen Faltprozess, einen Steckprozess, einen Warmumformprozess oder einen Hydroformprozess umfasst, und/oder
wobei das Formen (203) des zumindest eines Verstärkungsträgers (113, 113-1, 113-2, 113-3, 113-4) einen Warmumformprozess, einen Kaltumformprozess, einen Rollformprozess oder einen Extrusionsprozess umfasst, und/oder
wobei das Formen (207) des zumindest einen Druckfluidbehälteraufnahmeelements (115, 115-1, 115-2) einen Warmumformprozess, einen Kaltumformprozess, einen Rollformprozess, oder einen Extrusionsprozess umfasst.

## Claims

1. Compressed fluid container holder (100) for holding at least one compressed fluid container (101) in a fluid-operated vehicle, comprising:
a receiving tub (103), wherein the receiving tub (103) has a base plate (105) and a circumferential outer wall (107), which is arranged on the base plate (105) or circumferenting the base plate (105), wherein the base plate (105) and the circumferential outer wall (107) are formed in one piece,
at least one reinforcement beam (113, 113-1, 113-2, 113-3, 113-4), which is fixed to the receiving tub (103) and extends between two opposite sides (120, 121, 123, 125) of the circumferential outer wall (107), and
at least one compressed fluid container receiving element (115, 115-1, 115-2), which is arranged in the interior space (111) of the receiving tub (103), wherein the compressed fluid container receiving element (115, 115-1, 115-2) is connected to the base plate (105) and/or the circumferential outer wall (107) of the receiving tub (103),
wherein the compressed fluid container receiving element (115, 115-1, 115-2) has at least one compressed fluid container receptacle (117), wherein the at least one compressed fluid container receptacle (117) is shaped to accommodate at least one compressed fluid container (101),
**characterized in that**
at least one hollow profile (141) is attached to an outer area of the circumferential outer wall (107) of the receiving tub (103), and that
the hollow profile (141) is a hollow chamber profile, which serves as a deformation element to protect the receiving tub (103), the interior space (111) and the compressed fluid container (101) from accidental damage, wherein the hollow profile (141) serves for attaching the compressed fluid container holder (100) to the vehicle.

2. Compressed fluid container holder (100) according to claim 1, wherein the compressed fluid container receiving element (115, 115-1, 115-2) has a plurality of compressed fluid container receptacles (117), wherein the compressed fluid container receptacles (117) are shaped to receive a plurality of compressed fluid containers (101), wherein respective adjacent compressed fluid container receptacles (117) are separated from one another in particular by a separating web (119) of the compressed fluid container receptacle element (115, 115-1, 115-2).

3. Compressed fluid container holder (100) according to claim 1 or 2, wherein the compressed fluid container receptacle (117) each has a receiving contour, which is each shaped complementary to an outer contour of the compressed fluid container (101), wherein the receiving contour in particular has a polygonal or circular cross section.

4. Compressed fluid container holder (100) according to one of the preceding claims, wherein the compressed fluid container receiving element (115, 115-1, 115-2) is shaped as a compressed fluid container receiving bar (115-1) or as a compressed fluid container receiving hollow body (115-2), which extends between two opposite sides, in particular a front side (120) and a back side (121) opposite the front side (120) or a first lateral side (123) and a second lateral side (125) opposite the first lateral side (123), of the circumferential outer wall (107), and wherein the compressed fluid container receiving bar (115-1) or the compressed fluid container receiving hollow body (115-2) is fixed in particular at the circumferential outer wall (107).

5. Compressed fluid container holder (100) according to one of the preceding claims, wherein the compressed fluid container holder (100) has a plurality of compressed fluid container receiving elements (115, 115-1, 115-2), which are adjacently arranged in the interior space (111) of the receiving tub (103), wherein opposite compressed fluid container receptacles (117) of the respective compressed fluid container receiving elements (115, 115-1, 115-2) are arranged in alignment with one another in order to accommodate a respective compressed fluid container (101) in the respective opposite compressed fluid container receptacles (117).

6. Compressed fluid container holder (100) according to one of the preceding claims, wherein the compressed fluid container holder (100) has a cover (109) which is connected to the circumferential outer wall (107) and closes off an interior space (111) of the receiving tub (103).

7. Compressed fluid container holder (100) according to one of the preceding claims, wherein the at least one reinforcement beam (113, 113-1, 113-2, 113-3, 113-4) is connected with the base plate (105), the circumferential outer wall (107) and/or the cover (109) of the receiving tub (103), or wherein the at least one reinforcement beam (113, 113-1, 113-2, 113-3, 113-4) is fixed at the base plate (105), the circumferential outer wall (107) and/or the cover (109) of the receiving tub (103) by a tolerance compensation element (137).

8. Compressed fluid container holder (100) according to one of the preceding claims, wherein the circumferential outer wall (107) has a front side (120), a back side (121) opposite the front side (120), a first lateral side (123), and a second lateral side (125) opposite the first lateral side (123), wherein the at least one reinforcement carrier (113, 113-1, 113-2, 113-3, 113-4) extends between the front side (120) and the back side (121) and/or between the first lateral side (123) and the second lateral side (125) of the circumferential outer wall (107).

9. Compressed fluid container holder (100) according to one of claims 6 to 8, wherein the cover (109) has a cover top side (127) and a circumferential cover wall (129), which is arranged at the cover top side (127) or circumferenting the cover top side (127), wherein the cover top side (127) and the circumferential cover wall (129) are formed in one piece, and wherein the circumferential cover wall (129) is connected to the circumferential outer wall (107).

10. Compressed fluid container holder (100) according to one of claims 6 to 9, wherein the circumferential outer wall (107) has a first circumferential attaching flange (131), wherein the cover (109), in particular the circumferential cover wall (129), has a second circumferential attaching flange (133), which is connected to the first circumferential attaching flange (131) in order to connect the cover (109) to the circumferential outer wall (107).

11. Compressed fluid container holder (100) according to one of the preceding claims, comprising a pressure connection line (135), which is arranged at least in sections in the interior space (111) of the receiving tub (103), and which is configured to provide a connection to the compressed fluid container, wherein the receiving tub (103), in particular the base plate (105), the circumferential outer wall (107) and/or the cover (109) has a line opening through which the pressure connection line (135) is led out of the interior space (111) of the receiving tub (103).

12. Compressed fluid container holder (100) according to one of the preceding claims, wherein at an outer area of the outer wall (107), in particular below a first circumferential attaching flange (131), an attaching aera (139) is formed, which is configured to attach the receiving tub (103) to a vehicle component (141), in particular to a seat cross member.

13. Compressed fluid container holder (100) according to one of the preceding claims, wherein the base plate (105) formed as one piece and the circumferential outer wall (107), and/or the cover (109) is formed as a deep-drawn component, folded component, hot-formed component, or hydroformed component.

14. Method (300) for producing a compressed fluid container holder (100) for receiving at least one compressed fluid container (101) in a fluid-operated vehicle, wherein the method (300) comprises the following method steps:
forming (311) a receiving tub (103) as one piece from a first semi-finished product, wherein the receiving tub (103) has a base plate (105) and a circumferential outer wall (107), which are arranged on the base plate (105) or circumferenting the base plate (105), wherein the base plate (105) and the circumferential outer wall (107) are formed in one piece,
forming (303) at least one reinforcement beam (113, 113-1, 113-2, 113-3, 113-4) from a second semi-finished product,
fixing (305) the reinforcement beam (113, 113-1, 113-2, 113-3, 113-4) to the receiving tub (103),
forming (307) at least one compressed fluid container receiving element (115, 115-1, 115-2) with at least one compressed fluid container receptacle (117) from a third semi-finished product,
connecting (309) the at least one compressed fluid container receiving element (115, 115-1, 115-2) to the base plate (105) of the receiving tub (103), and
forming (311), in particular one-piece forming (203), a cover (109) from another third semi-finished product,
**characterized in that**
at least one hollow profile (141) is attached to an outer area of the circumferential outer wall (107) of the receiving tub (103), and that
the hollow profile (141) is a hollow chamber profile, which serves as a deformation element to protect the receiving tub (103), the interior space (111) and the compressed fluid container (101) from accidental damage, wherein the hollow profile (141) serves for attaching the compressed fluid container holder (100) to the vehicle.

15. Method (300) according to claim 14, wherein the one-piece forming (201) of the receiving tub (103) and/or the forming (211) of the cover (109) comprises a deep-drawing process, a folding process, a plug-in process, a hot forming process or a hydroforming process, and/or
wherein the forming (203) of the at least one reinforcing beam (113, 113-1, 113-2, 113-3, 113-4) comprises a hot forming process, a cold forming process, a roll forming process or an extrusion process, and/or
wherein the forming (207) of the at least one compressed fluid container receiving element (115, 115-1, 115-2) comprises a hot forming process, a cold forming process, a roll forming process, or an extrusion process.

## Revendications

1. Support de récipient de fluide comprimé (100) pour contenir au moins un récipient de fluide comprimé (101) dans un véhicule fonctionnant par fluide, comprenant :
un bac de réception (103), le bac de réception (103) comportant une plaque de base (105) et une paroi externe circonférentielle (107), qui est disposée sur la plaque de base (105) ou circonférentielle de la plaque de base (105), dans laquelle la plaque de base (105) et la paroi externe circonférentielle (107) sont formées d'une seule pièce,
au moins une poutre de renfort (113, 113-1, 113-2, 113-3, 113-4), qui est fixée au bac de réception (103) et s'étend entre deux côtés opposés (120, 121, 123, 125) de la paroi externe circonférentielle (107), et
au moins un élément de réception de récipient de fluide comprimé (115, 115-1, 115-2), qui est disposé dans l'espace intérieur (111) de la cuve de réception (103), l'élément de réception de récipient de fluide comprimé (115, 115- 1, 115-2) est relié à la plaque de base (105) et/ou à la paroi externe circonférentielle (107) de la cuve de réception (103),
dans lequel l'élément de réception de récipient de fluide comprimé (115, 115-1, 115-2) comporte au moins un récipient de récipient de fluide comprimé (117), dans lequel au moins un récipient de récipient de fluide comprimé (117) est formé pour recevoir au moins un récipient de fluide comprimé réservoir de fluide (101),
**caractérisé en ce que**
au moins un profilé creux (141) est fixé sur une zone extérieure de la paroi extérieure circonférentielle (107) du bac de réception (103), et **en ce que**
le profilé creux (141) est un profilé à chambre creuse, qui sert d'élément de déformation pour protéger la cuve de réception (103), l'espace intérieur (111) et le récipient de fluide comprimé (101) contre des dommages accidentels, dans lequel le profilé creux (141) sert à fixer le support de récipient de fluide comprimé (100) au véhicule.

2. Support de récipient de fluide comprimé (100) selon la revendication 1, dans lequel l'élément de réception de récipient de fluide comprimé (115, 115-1, 115-2) comporte une pluralité de réceptacles de récipient de fluide comprimé (117), dans lequel le récipient de fluide comprimé les récipients (117) sont conformés pour recevoir une pluralité de récipients de fluide comprimé (101), les récipients de récipient de fluide comprimé adjacents (117) étant séparés les uns des autres, en particulier par une bande de séparation (119) de l'élément de récipient de récipient de fluide comprimé (115, 115-1, 115-2).

3. Support de récipient de fluide comprimé (100) selon la revendication 1 ou 2, dans lequel le réceptacle de récipient de fluide comprimé (117) présente chacun un contour de réception, qui est chacun de forme complémentaire d'un contour extérieur du récipient de fluide comprimé (101), dans lequel le contour de réception présente notamment une section polygonale ou circulaire.

4. Support de récipient de fluide comprimé (100) selon l'une des revendications précédentes, dans lequel l'élément de réception de récipient de fluide comprimé (115, 115-1, 115-2) est conformé en barre de réception de récipient de fluide comprimé (115-1) ou comme récipient de fluide comprimé recevant un corps creux (115-2), qui s'étend entre deux côtés opposés, notamment un côté avant (120) et un côté arrière (121) opposé au côté avant (120) ou un premier côté latéral (123) et un deuxième côté latéral (125) opposé au premier côté latéral (123), de la paroi externe circonférentielle (107), et dans lequel la barre de réception de récipient de fluide comprimé (115-1) ou le corps creux de réception de récipient de fluide comprimé (115-2) est fixé notamment au niveau de la paroi externe circonférentielle (107).

5. Support de récipient de fluide comprimé (100) selon l'une des revendications précédentes, dans lequel le support de récipient de fluide comprimé (100) comporte une pluralité d'éléments de réception de récipient de fluide comprimé (115, 115-1, 115-2), qui sont adjacent disposés dans l'espace intérieur (111) de la cuve de réception (103), dans lequel des réceptacles opposés (117) de récipient de fluide comprimé des éléments de réception de récipient de fluide comprimé respectifs (115, 115-1, 115-2) sont disposés en alignement avec un autre afin de loger un récipient de fluide comprimé respectif (101) dans les réceptacles de récipient de fluide comprimé opposés respectifs (117).

6. Support de récipient de fluide comprimé (100) selon l'une des revendications précédentes, dans lequel le support de récipient de fluide comprimé (100) présente un couvercle (109) qui est relié à la paroi externe circonférentielle (107) et ferme un espace intérieur (111) du bac de réception (103).

7. Support de récipient de fluide comprimé (100) selon l'une des revendications précédentes, dans lequel la au moins une poutre de renfort (113, 113-1, 113-2, 113-3, 113-4) est reliée à la plaque de base (105), la paroi extérieure circonférentielle (107) et/ou le couvercle (109) du bac de réception (103), ou dans lequel la au moins une poutre de renfort (113, 113-1, 113-2, 113-3, 113 -4) est fixé à la plaque de base (105), à la paroi extérieure circonférentielle (107) et/ou au couvercle (109) du bac de réception (103) par un élément de compensation de tolérance (137).

8. Support de récipient de fluide comprimé (100) selon l'une des revendications précédentes, dans lequel la paroi externe circonférentielle (107) présente une face avant (120), une face arrière (121) opposée à la face avant (120), une première face latérale côté (123), et un deuxième côté latéral (125) opposé au premier côté latéral (123), le au moins un support de renfort (113, 113-1, 113-2, 113-3, 113-4) s'étendant entre le côté avant (120) et le côté arrière (121) et/ou entre le premier côté latéral (123) et le deuxième côté latéral (125) de la paroi externe circonférentielle (107).

9. Support de récipient de fluide comprimé (100) selon l'une des revendications 6 à 8, dans lequel le couvercle (109) présente un côté supérieur de couvercle (127) et une paroi de couvercle circonférentielle (129), qui est disposée au niveau du côté supérieur de couvercle (127) ou circonférentiel du côté supérieur du couvercle (127), dans lequel le côté supérieur du couvercle (127) et la paroi circonférentielle du couvercle (129) sont formés d'une seule pièce, et dans lequel la paroi circonférentielle du couvercle (129) est reliée à la paroi externe circonférentielle (107).

10. Support de récipient de fluide comprimé (100) selon l'une des revendications 6 à 9, dans lequel la paroi externe circonférentielle (107) présente une première bride de fixation circonférentielle (131), dans lequel le couvercle (109), notamment la paroi circonférentielle de couvercle (129), comporte une seconde bride de fixation circonférentielle (133), qui est reliée à la première bride de fixation circonférentielle (131) afin de relier le couvercle (109) à la paroi externe circonférentielle (107).

11. Support de récipient de fluide comprimé (100) selon l'une des revendications précédentes, comprenant une conduite de raccordement sous pression (135), qui est disposée au moins par tronçons dans l'espace intérieur (111) du bac de réception (103), et qui est configuré pour fournir une connexion au récipient de fluide comprimé, dans lequel le bac de réception (103), en particulier la plaque de base (105), la paroi extérieure circonférentielle (107) et/ou le couvercle (109) présentent une ouverture de ligne à travers laquelle la conduite de raccordement sous pression (135) sort de l'espace intérieur (111) de la cuve de réception (103).

12. Support de récipient de fluide comprimé (100) selon l'une des revendications précédentes, dans lequel au niveau d'une zone extérieure de la paroi extérieure (107), en particulier en dessous d'une première bride de fixation circonférentielle (131), une zone de fixation (139) est formée, qui est configuré pour fixer le bac de réception (103) à un composant du véhicule (141), en particulier à une traverse de siège.

13. Support de récipient de fluide comprimé (100) selon l'une des revendications précédentes, dans lequel la plaque de base (105) formée d'une seule pièce et la paroi externe circonférentielle (107), et/ou le couvercle (109) est formé d'une seule pièce, pièce étirée, pièce pliée, pièce formée à chaud ou pièce hydroformée.

14. Procédé (300) de production d'un support de récipient de fluide comprimé (100) pour recevoir au moins un récipient de fluide comprimé (101) dans un véhicule fonctionnant par fluide, dans lequel le procédé (300) comprend les étapes de procédé suivantes :
former (311) un bac de réception (103) en une seule pièce à partir d'un premier produit semi-fini, le bac de réception (103) comportant une plaque de base (105) et une paroi externe circonférentielle (107), qui sont disposées sur la base plaque de base (105) ou circonférentielle de la plaque de base (105), dans lequel la plaque de base (105) et la paroi externe circonférentielle (107) sont formées d'une seule pièce,
former (303) au moins une poutre de renfort (113, 113-1, 113-2, 113-3, 113-4) à partir d'un deuxième produit semi-fini,
fixer (305) la poutre de renfort (113, 113-1, 113-2, 113-3, 113-4) au bac de réception (103),
former (307) au moins un élément de réception de récipient de fluide comprimé (115, 115-1, 115-2) avec au moins un réceptacle de récipient de fluide comprimé (117) à partir d'un troisième produit semi-fini,
connecter (309) le au moins un élément de réception de récipient de fluide comprimé (115, 115-1, 115-2) à la plaque de base (105) de la cuve de réception (103), et
former (311), notamment monobloc (203), un couvercle (109) à partir d'un autre troisième demi-produit,
**caractérisé en ce que**
au moins un profilé creux (141) est fixé sur une zone extérieure de la paroi extérieure circonférentielle (107) du bac de réception (103), et **en ce que**
le profilé creux (141) est un profilé à chambre creuse, qui sert d'élément de déformation pour protéger la cuve de réception (103), l'espace intérieur (111) et le récipient de fluide comprimé (101) contre des dommages accidentels, dans lequel le profilé creux (141) sert à fixer le support de récipient de fluide comprimé (100) au véhicule.

15. Procédé (300) selon la revendication 14, dans lequel le formage monobloc (201) du bac de réception (103) et/ou le formage (211) du couvercle (109) comprend un procédé d'emboutissage profond, un procédé de pliage, un procédé d'enfichage, un procédé de formage à chaud ou un procédé d'hydroformage, et/ou
dans lequel le formage (203) de la ou des poutres de renfort (113, 113-1, 113-2, 113-3, 113-4) comprend un processus de formage à chaud, un processus de formage à froid, un processus de profilage ou une extrusion processus, et/ou
dans lequel le formage (207) du ou des éléments de réception de récipient de fluide comprimé (115, 115-1, 115-2) comprend un processus de formage à chaud, un processus de formage à froid, un processus de formage par rouleau ou un processus d'extrusion.
